(19) Europäisches Patentamt
European Patent Office
Office européen des brevets

(11) EP 3 763 793 B1

(12) EUROPEAN PATENT SPECIFICATION

(45) Date of publication and mention of the grant of the patent:
**11.05.2022 Bulletin 2022/19**

(21) Application number: **20187670.3**

(22) Date of filing: **01.03.2018**

(51) International Patent Classification (IPC):
***C09D 175/04*** *(2006.01)* ***B05D 7/00*** *(2006.01)*
***B05D 7/24*** *(2006.01)* ***B32B 27/40*** *(2006.01)*
***C08G 18/32*** *(2006.01)* ***C08G 18/79*** *(2006.01)*
***C08G 18/02*** *(2006.01)* ***C08G 18/09*** *(2006.01)*
***C08G 18/10*** *(2006.01)* ***C08G 18/48*** *(2006.01)*
***C08G 18/73*** *(2006.01)* ***C08G 18/78*** *(2006.01)*

(52) Cooperative Patent Classification (CPC):
**C08G 18/022; B05D 7/00; B05D 7/24; B32B 27/40; C08G 18/092; C08G 18/10; C08G 18/32; C08G 18/3206; C08G 18/4833; C08G 18/73; C08G 18/7837; C08G 18/79; C08G 18/792; C09D 175/04**

(54) **POLYASPARTIC COATING COMPOSITION, COATING FILM, AND COATING ARTICLE**

POLYASPARAGINSÄUREBESCHICHTUNGSZUSAMMENSETZUNG, BESCHICHTUNGSFILM UND BESCHICHTUNGSGEGENSTAND

COMPOSITION DU REVÊTEMENT POLYASPARTIQUE, FILM DE REVÊTEMENT ET ARTICLE DE REVÊTEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.03.2017 JP 2017043117**
**07.03.2017 JP 2017043140**
**05.07.2017 JP 2017132041**

(43) Date of publication of application:
**13.01.2021 Bulletin 2021/02**

(62) Document number(s) of the earlier application(s) in accordance with Art. 76 EPC:
**18763922.4 / 3 594 300**

(73) Proprietor: **Asahi Kasei Kabushiki Kaisha**
**Tokyo 1000006 (JP)**

(72) Inventors:
- **TAKENO, Satoshi**
  **Tokyo, 101-8101 (JP)**
- **FUKUCHI, Takashi**
  **Tokyo, 101-8101 (JP)**

(74) Representative: **Strehl Schübel-Hopf & Partner**
**Maximilianstrasse 54**
**80538 München (DE)**

(56) References cited:
**EP-A1- 0 959 086** **EP-A1- 1 347 004**
**WO-A1-2016/146574** **US-A1- 2015 158 966**
**US-B1- 6 183 870**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to a polyaspartic coating composition, coating film, and coating article.

BACKGROUND ART

Among polyurea coating compositions, an aliphatic polyaspartic coating composition is formed by an aspartic acid ester compound having an amino group and an aliphatic and/or alicyclic polyisocyanate composition having an isocyanate group. The aliphatic polyaspartic coating composition forms a coating film which is significantly prevented from being colored to yellow when exposed to ultraviolet light, the coloring to yellow being a defect of an aromatic polyurea coating composition, and is conventionally used in a wide range of applications such as various coating materials, flooring materials, waterproof materials, or the like.

The aspartic acid ester compound has a viscosity lower than that of a polyol, which is the main agent of a polyurethane coating composition, and the amount of a diluent solvent in the polyaspartic coating composition can be significantly reduced, and therefore a high solid formulation or a solventless formulation can be realized. In addition, the reactivity of an amino group of an aspartic acid ester compound with an isocyanate group of an aliphatic and/or alicyclic polyisocyanate is rapid, and therefore the polyaspartic coating composition has characteristics in which the curing speed thereof is rapider than that of a polyurethane coating composition even at room temperature and the mechanical strength thereof is excellent.

For example, Patent Document 1 discloses a polyaspartic coating composition which is an aliphatic polyurea coating composition composed of a polyamine component containing a secondary amino group having an aspartic acid ester structure and a polyisocyanate component which is an aliphatic polyisocyanate composition having an isocyanate group. The coating composition has characteristics in which the pot life is relatively long and a coating film formed thereby has a high hardness, and therefore, the coating composition can be applied without using any high-pressure collision mixing sprayer.

US 6,183,870 B1 discloses coating compositions containing aspartate-terminated urea/urethane prepolymers, diaspartates and a polyisocyanate adduct prepared from aliphatic diisocyanates. EP 0959 086 A1 discloses a coating agent comprising a polyisocyanate component, a polyamine and a polyaspartic acid ester. EP 1 347 004 A1 discloses a polyisocyanate mixture containing different polyisocyanates. US 2015/0158966 A1 discloses a polyisocyanate mixture containing iminooxadiazine dione groups, isocyanurate groups, uretdione groups and allophanate groups. WO 2016/146574 A1 discloses a polyisocyanate composition comprising compounds containing isocyanate groups, isocyanurate groups and allophanate groups.

DOCUMENTS OF RELATED ART

Patent Documents

[Patent Document 1] Japanese Unexamined Patent Application, First Publication No. Hei 3-43472

SUMMARY OF INVENTION

PROBLEMS TO BE SOLVED BY THE INVENTION

However, the polyaspartic coating composition disclosed in Patent Document 1 has room for further improvement so as to realize high solid formulation or solventless formulation, because the viscosity of the aliphatic polyisocyanate composition is high, and there is a need to add a diluting solvent to the aliphatic polyisocyanate composition and/or the polyaspartic coating composition. In addition, the polyaspartic coating composition also has room for further improvement in terms of the pot life when the polyaspartic coating composition is blended in the field for hand-painting using a brush, a roller, or the like.

The present invention aims to provide a polyaspartic coating composition having characteristics in which an aliphatic and /or alicyclic polyisocyanate composition has a low viscosity suitable for high solid formulation or solventless formulation while maintaining curability and drying characteristics, makes it possible to form a coating film having excellent chemical resistance, hardness, and weather resistance, and has an excellent pot life.

MEANS TO SOLVE THE PROBLEMS

The present invention is as laid out in the claims.

EFFECTS OF THE INVENTION

The polyaspartic coating composition according to the present invention exhibits a low viscosity suitable for high solid formulation or solventless formulation while maintaining curability and drying characteristics, makes it possible to form a coating film having excellent chemical resistance, hardness, and weather resistance, and is excellent in pot life.

EMBODIMENTS FOR CARRYING OUT THE INVENTION

The present invention will be described specifically below. The following first embodiment is for reference. The second embodiment further below describes the present invention.

[Polyaspartic coating composition]

A polyaspartic coating composition of the first embodiment contains: (A) an aspartic acid ester compound of formula (I):

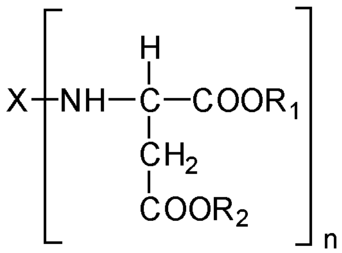

(I)

(in the formula (I), X is an n-valent organic group obtained by removing a primary amino group from an n-valent polyamine, $R_1$ and $R_2$ are identical or different organic groups inactive against an isocyanate group under reaction conditions, and n is an integer of 2 or more), and
(B1) a polyisocyanate composition containing a polyisocyanate obtained from at least one diisocyanate monomer selected from the group consisting of aliphatic diisocyanate monomers and alicyclic diisocyanate monomers, wherein the molar ratio x represented by equation (1) is 0.05 to 0.5, the molar ratio d represented by equation (4) is 0.02 to 0.5, and the molar ratio e represented by equation (5) is 0 to 0.05.

$$\text{Molar ratio } x = (B+C+D) / (A+B+C+D) \qquad (1)$$

$$\text{Molar ratio } d = D / (A+B+C+D) \qquad (4)$$

$$\text{Molar ratio } e = E / A \qquad (5)$$

In the equations, A is the content (% by mole) of an isocyanurate group of formula (II) in the polyisocyanate composition, B is the content (% by mole) of an iminooxadiazinedione group of formula (III) in the polyisocyanate composition, C is the content (% by mole) of a uretdione group of formula (IV) in the polyisocyanate composition, D is the content (% by mole) of an allophanate group of formula (V) in the polyisocyanate composition, and E is the content (% by mole) of a biuret group of formula (VI) in the polyisocyanate composition.

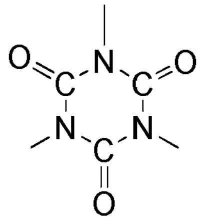
(II)

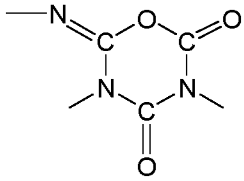
(III)

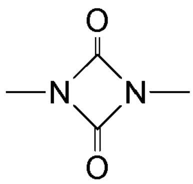
(IV)

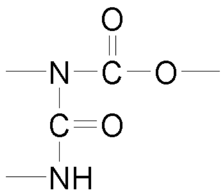
(V)

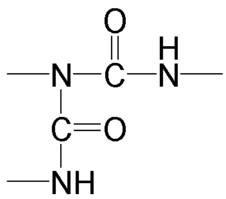
(VI)

In the polyisocyanate composition, the molar ratio d is preferably 0.03 to 0.3, and the molar ratio f of equation (6) is preferably 0.001 to 0.005.

$$\text{Molar ratio } f = F / (A+B+C+D) \qquad (6)$$

In the equation, F is the content (% by mole) of a uretone imino group of formula (VII) in the polyisocyanate composition.

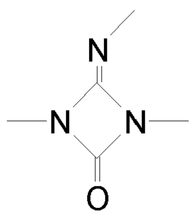
(VII)

In the polyisocyanate composition, the molar ratio d is preferably 0.04 to 0.3, the molar ratio b of equation (2) is preferably 0 to 0.4, and, the molar ratio c of equation (3) is preferably 0 to 0.3.

$$\text{Molar ratio b} = B / (A+B+C+D) \quad (2)$$

$$\text{Molar ratio c} = C / (A+B+C+D) \quad (3)$$

In the equations, A, B, C and D are the same as mentioned above.
It is preferable that the equivalent ratio of an amino group of the aspartic acid ester compound used in the present embodiment and isocyanate group of the polyisocyanate composition used in the present embodiment, amino group: isocyanate group, be 10:1 to 1:10, more preferably 5:1 to 1:5, and even more preferably 2:1 to 1:2.
In the case where the equivalent ratio of an amino group of the aspartic acid ester compound and isocyanate group of the polyisocyanate composition (amino group/isocyanate group) is 10/1 or less, there is a tendency in which the curability is further improved. In the case where the equivalent ratio of an amino group and isocyanate group (amino group/isocyanate group) is 1/10 or more, there is a tendency in which the chemical resistance and the weather resistance of a coating film formed using the polyaspartic coating composition according to the present embodiment is further improved.

[Aspartic acid ester compound]

The aspartic acid ester compound (A) used in the present embodiment is represented by the following formula (I).

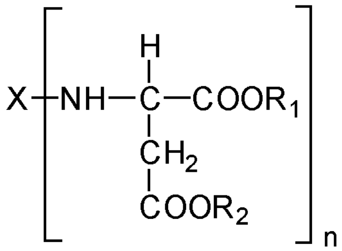

(I)

In the formula (I), X is an n-valent organic group obtained by removing a primary amino group from an n-valent polyamine, $R_1$ and $R_2$ are identical or different organic groups inactive against an isocyanate group under reaction conditions, and n is an integer of 2 or more.
Although there are no particular limitations on X in the formula (I) according to the present embodiment, X is preferably an aliphatic and/or alicyclic polyamine free from aromatic groups, from the viewpoint of yellowing resistance, and, for example, is based on a n-valent polyamine, such as ethylenediamine, 1,2-diaminopropane, 1,4-diaminobutane, 1,5-diaminopentane, 1,6-diaminohexane, 2,5-diamino-2,5-dimethylhexane, 2,2,4- and/or 2,4,4-trimethyl-1,6-diaminohexane, 1-11-diaminoundecane, 1-12-diaminododecane, 1-amino-3,3,5-trimethyl-5-aminomethyl cyclohexane, 2,4- and/or 2,6-hexahydrotoluenediamine, 2,4'- and/or 4,4'-diaminodicyclohexylmethane, 3,3'-dimethyl-4,4'-diaminodicyclohexylmethane, 2,4,4'-triamino-5-methyl-dicyclohexylmethane, or a polyether polyamine having a number-average molecular weight of 148 to 6000, in which a primary amino group is bonded aliphatically.
X is preferably based on 1,4-diaminobutane, 1,5-diaminopentane, 1,6-diaminohexane, 2,2,4- and/or 2,4,4-trimethyl-1,6-diaminohexane, 1-amino-3,3,5-trimethyl-5-aminomethylcyclohexane, 4,4'-diaminodicyclohexylmethane, or 3,3'-dimethyl-4,4'-diaminodicyclohexylmethane. X is more preferably based on 4,4'-diaminodicyclohexylmethane, or 3,3' -dimethyl-4,4' -diaminodicyclohexylmethane.
In the present embodiment, the phrase "inactive against an isocyanate group under reaction conditions" defined in the description relating to $R_1$ and $R_2$ in the formula (I) means that these groups do not have any Tserevitinov-active hydrogen-containing groups (CH acid compound) such as a hydroxyl group, an amino group, or a thiol group.
It is preferable that $R_1$ and $R_2$ each independently represents a C1 to 10 alkyl group, and more preferably a methyl group, an ethyl group, or a butyl group.
In the present embodiment, n in the formula (I) is preferably an integer of 2 to 6, more preferably an integer of 2 to 4, and even more preferably 2. Although there are no particular limitations on the method for preparing the aspartic acid ester compound (A) in the present embodiment, the aspartic acid ester compound (A) may be prepared, for example, by reacting a primary polyamine of formula (VII) with a maleic acid ester or a fumaric acid ester of formula (VIII).

$X-[NH_2]_n$ (VII)

$R_1OOC-CH=CH-COOR_2$ (VIII)

(In the formulae, X, $R_1$, $R_2$, and n represent the same as those in the formula (I).)

Although there are no particular limitations on the suitable polyamine, examples thereof include the diamines mentioned above based on X. Although there are no particular limitations on the suitable maleic acid ester or fumaric acid ester, examples thereof include maleic acid esters or fumaric acid esters having, as $R_1$ and $R_2$, groups defined as $R_1$ and $R_2$ in the formula (I). Preferable examples thereof include maleic acid esters and fumaric acid esters in which $R_1$ and $R_2$ are C1 to 10 alkyl groups, and more preferable examples thereof include dimethyl maleate, diethyl maleate, dibutyl maleate, and the corresponding fumaric acid esters.

The preparation of the aspartic acid ester compound from the above-mentioned starting materials is preferably conducted at a temperature of 0°C to 100°C. The starting materials are used at a ratio that makes at least one, preferably only one, olefin double bond present in each primary amino group. After the reaction, excess starting materials are removed by distillation, as needed. The reaction may be conducted in bulk or in the presence of a suitable solvent (such as methanol, ethanol, propanol, or dioxane, or a mixture of these solvents, although there are no particular limitations thereon).

[Polyisocyanate composition (B1)]

The polyisocyanate composition (B1) used in the present embodiment contains an aliphatic polyisocyanate and /or an alicyclic polyisocyanate obtained from at least one diisocyanate monomer selected from the group consisting of aliphatic diisocyanate monomers and alicyclic diisocyanate monomers, in which the molar ratio x represented by equation (1) is 0.05 to 0.5, the molar ratio d represented by equation (4) is 0.02 to 0.5, and the molar ratio e represented by equation (5) is 0 to 0.05.

It is preferable that the molar ratio d be 0.03 to 0.3, and more preferably 0.04 to 0.3.

It is preferable that the molar ratio b of equation (2) be 0 to 0.4, and the molar ratio c of equation (3) be 0 to 0.3.

It is preferable that the molar ratio f of equation (6) be 0.001 to 0.005.

$$\text{Molar ratio } x = (B+C+D) / (A+B+C+D) \quad (1)$$

$$\text{Molar ratio } b = B / (A+B+C+D) \quad (2)$$

$$\text{Molar ratio } c = C / (A+B+C+D) \quad (3)$$

$$\text{Molar ratio } d = D / (A+B+C+D) \quad (4)$$

$$\text{Molar ratio } e = E / A \quad (5)$$

$$\text{Molar ratio } f = F / (A+B+C+D) \quad (6)$$

In the equations, A is the content (% by mole) of an isocyanurate group of formula (II) in the polyisocyanate composition, B is the content (% by mole) of an iminooxadiazinedione group of formula (III) in the polyisocyanate composition, C is the content (% by mole) of a uretdione group of formula (IV) in the polyisocyanate composition, D is the content (% by mole) of an allophanate group of formula (V) in the polyisocyanate composition, E is the content (% by mole) of a biuret group of formula (VI) in the polyisocyanate composition, and F is the content (% by mole) of a uretone imino group of formula (VII) in the polyisocyanate composition.

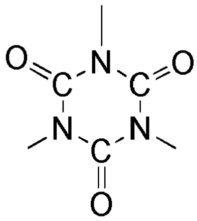

(II)

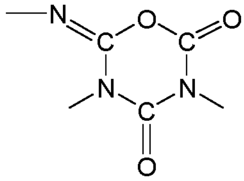

(III)

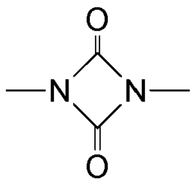

(IV)

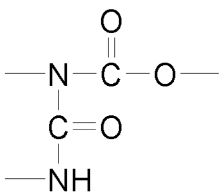

(V)

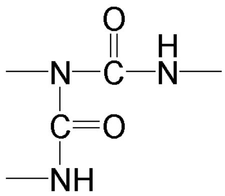

(VI)

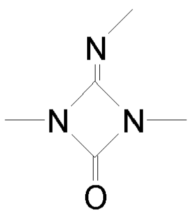

(VII)

It is preferable that the lower limit of the molar ratio x be 0.1, more preferably 0.15, and even more preferably 0.2. It is preferable that the upper limit of the molar ratio x be 0.4, more preferably 0.35, and even more preferably 0.3.

In the case where the molar ratio x is 0.05 or more, there is a tendency in which the polyisocyanate composition (B1) realizes low viscosity suitable for high solid formulation or solventless formulation.

In the case where the molar ratio x is 0.5 or less, there is a tendency in which the chemical resistance and the weather resistance of a coating film formed using the polyaspartic coating composition is improved.

Examples of a method for obtaining the polyisocyanate composition (B1) having a molar ratio x of 0.05 to 0.5 include methods in which iminooxadiazinedione groups, uretdione groups, and allophanate groups are formed by conducting the below-mentioned iminooxadiazinedione-forming reaction, uretdione-forming reaction, and allophanate-forming reaction, to adjust the molar ratios.

It is preferable that the molar ratio of an iminooxadiazinedione group, as the molar ratio b = B / (A+B+C+D), be 0.35 or less, more preferably 0.3 or less, even more preferably 0.25 or less, even more preferably 0.2 or less, and even more preferably 0.1 or less.

In the case where the molar ratio b is 0.4 or less, there is a tendency in which the polyisocyanate composition (B1) realizes low viscosity suitable for high solid formulation or solventless formulation. It is preferable that the molar ratio b be 0.2 or less from the viewpoint that the weather resistance of a coating film formed using the polyaspartic coating composition is further improved.

Examples of a method for obtaining the polyisocyanate composition (B1) having a molar ratio b of 0.4 or less include a method in which iminooxadiazinedione groups are formed by conducting an iminooxadiazinedione-forming reaction to adjust the molar ratio b.

It is preferable that the molar ratio of a uretdione group, as the molar ratio c = C / (A+B+C+D), be 0.25 or less.

In the case where the molar ratio c is 0.3 or less, there is a tendency in which the curability is further maintained. It is more preferable that the molar ratio c be 0.25 or less from the viewpoint that the chemical resistance and the weather resistance of a coating film formed using the polyaspartic coating composition is improved.

Examples of a method for obtaining the polyisocyanate composition (B1) having a molar ratio c of 0.3 or less include a method in which uretdione groups are formed by conducting the uretdione-forming reaction mentioned below to adjust the molar ratio c.

It is preferable that the molar ratio of an allophanate group, as the molar ratio d = D / (A+B+C+D), be 0.03 to 0.3, more preferably 0.04 to 0.3, and even more preferably 0.05 to 0.25.

It is preferable that the molar ratio d be 0.02 or more from the viewpoint that the polyisocyanate composition (B1) realizes low viscosity suitable for high solid formulation or solventless formulation.

It is preferable that the molar ratio d be 0.5 or less from the viewpoint that the curability is further maintained.

It is more preferable that the molar ratio d be 0.25 or less from the viewpoint that the chemical resistance and the weather resistance of a coating film formed using the polyaspartic coating composition is improved.

Examples of a method for obtaining the polyisocyanate composition (B1) having a molar ratio d within the above-mentioned range include a method in which allophanate groups are formed by conducting the allophanate-forming reaction mentioned below to adjust the molar ratio d.

The molar ratio of a biuret group, as the molar ratio e = E / A, is 0 to 0.05, preferably 0.03 or less, more preferably 0.02 or less, and even more preferably 0.01 or less.

In the case where the molar ratio e is 0.05 or less, there is a tendency in which the chemical resistance and the weather resistance of a coating film formed using a polyaspartic coating composition is improved.

Examples of a method for obtaining the polyisocyanate composition (B1) having a molar ratio e of 0.05 or less include a method in which biuret groups are formed by conducting the biuret-forming reaction mentioned below to adjust the molar ratio e.

It is more preferable that the molar ratio of a uretone imino group, as the molar ratio f = F / (A+B+C+D), be 0.001 to 0.004, more preferably 0.001 to 0.003, and even more preferably 0.001 to 0.002.

In the case where the molar ratio f is 0.001 or more, there is a tendency in which the polyisocyanate composition (B1) realizes low viscosity suitable for high solid formulation or solventless formulation.

In the case where the molar ratio f is 0.005 or less, there is a tendency in which the pot life of the polyaspartic coating composition is further improved.

Examples of a method for obtaining the polyisocyanate composition (B1) having a molar ratio f of 0.001 to 0.005 include: a method in which the below-mentioned isocyanurate-forming reaction is conducted, followed by deactivating a catalyst, and then leaving the resultant at approximately 140°C to 160°C for several hours to allow the reaction to proceed to adjust the molar ratio f; and a method in which the polyisocyanate composition obtained by allowing the reaction to proceed at approximately 20°C to 80°C for several hours to several tens of hours using, as a catalyst, a hetero-ring-containing phosphorus-based compound, such as 1-butylphosphorane, is partially mixed to adjust the molar ratio f.

The molar ratios of each group in the polyisocyanate composition may be appropriately adjusted using the method described in the below-mentioned description relating to [method for preparing polyisocyanate] to adjust the molar ratio x, the molar ratio b, the molar ratio c, the molar ratio d, the molar ratio e, and the molar ratio f to the above-mentioned ranges. The molar ratios may be measured by conducting $^{13}$C-NMR in accordance with the method described in examples described below.

It is preferable that the isocyanate content of the polyisocyanate composition used in the present embodiment (hereinafter, may be abbreviated as "NCO content"), relative to the total mass (100% by mass) of the polyisocyanate composition, be 10% by mass to 60% by mass. The lower limit of the NCO content is more preferably 13% by mass, and even more preferably 15% by mass. The upper limit of the NCO content is more preferably 55% by mass, and even

more preferably 50% by mass.

In the case where the NCO content is 10% by mass or more, there is a tendency in which the curability is further maintained.

In the case where the NCO content is 60% by mass or less, there is a tendency in which the content of the diisocyanate monomers is adjusted in a more preferable range. The NCO content may be measured by the method described in examples mentioned below.

The viscosity at 25°C of the polyisocyanate composition used in the present embodiment is preferably 10 mPa.s to 1000 mPa.s. The lower limit of the viscosity is more preferably 50 mPa.s, even more preferably 100 mPa.s, and even more preferably 200 mPa.s. The upper limit of the viscosity is more preferably 900 mPa.s, even more preferably 800 mPa.s, and even more preferably 700 mPa.s.

In the case where the viscosity is 10 mPa.s or more, there is a tendency in which the curability is further maintained.

In the case where the viscosity is 1000 mPa.s or less, there is a tendency in which the polyisocyanate composition realizes low viscosity further suitable for high solid formulation or solventless formulation. The viscosity may be determined by the method mentioned in examples below.

The number-average molecular weight of the polyisocyanate composition used in the present embodiment is preferably 150 to 900.

The lower limit of the number-average molecular weight is more preferably 180, even more preferably 220, and even more preferably 250.

The upper limit of the number-average molecular weight is more preferably 800, even more preferably 700, and even more preferably 600.

In the case where the number-average molecular weight is 150 or more, there is a tendency in which the curability is further maintained.

In the case where the number-average molecular weight is 900 or less, there is a tendency in which the polyisocyanate composition realizes low viscosity further suitable for high solid formulation or solventless formulation. The number-average molecular weight may be measured by the method described in examples below.

The isocyanate group average number of the polyisocyanate composition used in the present embodiment is preferably 2.0 to 6.0.

The lower limit of the isocyanate group average number is more preferably 2.2, even more preferably 2.4, even more preferably 2.6, and even more preferably 2.8.

The upper limit of the isocyanate group average number is more preferably 5.0, even more preferably 4.0, even more preferably 3.5, and even more preferably 3.0.

In the case where the isocyanate group average number is 2.0 or more, there is a tendency in which the curability is further maintained.

In the case where the isocyanate group average number is 6.0 or less, there is a tendency in which the polyisocyanate composition realizes low viscosity further suitable for high solid formulation or solventless formulation. The isocyanate group average number may be measured by the method described in examples below.

It is preferable that the content of the diisocyanate monomers in the polyisocyanate composition used in the present embodiment, relative to the total mass (100% by mass) of the aliphatic and /or alicyclic polyisocyanate, be 0% by mass to 1.0% by mass, more preferably 0.5% by mass or less, and even more preferably 0.3% by mass or less.

In the case where the content of the diisocyanate monomers is 1.0% by mass or less, there is a tendency in which the curability is further maintained. The content of the diisocyanate monomers may be measured by the method described in examples mentioned below.

[Diisocyanate monomers]

Diisocyanate monomers used in the present embodiment may be selected from the group consisting of aliphatic diisocyanates and alicyclic diisocyanates.

Although there are no particular limitations on the aliphatic diisocyanate used in the present embodiment, an aliphatic diisocyanate having 4 to 30 carbon atoms is preferable, and examples thereof include tetramethylene diisocyanate, pentamethylene diisocyanate, hexamethylene diisocyanate (hereinafter, abbreviated as "HDI"), 2,2,4-trimethyl-1,6-hexamethylene diisocyanate, and lysinediisocyanate. Among these, HDI is preferable from the viewpoint of ease of industrial availability. One of the aliphatic diisocyanates may be used alone, or at least two thereof may be used in combination.

Although there are no particular limitations on the alicyclic diisocyanate used in the present embodiment, an alicyclic diisocyanate having 8 to 30 carbon atoms is preferable, and examples thereof include isophorone diisocyanate (hereinafter, abbreviated as "IPDI"), 1,3-bis(isocyanatomethyl)-cyclohexane, 4,4'-dicyclohexylmethane diisocyanate, norbornene diisocyanate, and hydrogenated xylidenediisocyanate. Among these, IPDI is more preferable, from the

viewpoint of weather resistance and ease of industrial availability. One of the alicyclic diisocyanates may be used alone, or at least two thereof may be used in combination.

As the diisocyanate monomers, at least one kind of aliphatic diisocyanate and at least one kind of alicyclic diisocyanate may be combined to be used.

[Method for preparing polyisocyanate]

The method for preparing polyisocyanate used in the present embodiment will be explained. The polyisocyanate used in the present embodiment may be obtained by simultaneously conducting an isocyanurate-forming reaction to form isocyanurate groups, an iminooxadiazinedione-forming reaction to form iminooxadiazinedione groups, a uretdione-forming reaction to form uretdione groups, an allophanate-forming reaction to form allophanate groups, a biuret-forming reaction to form biuret groups, and a uretone imino-forming reaction to form uretone imino groups, in the presence of an excess amount of diisocyanate monomers, followed by removing unreacted diisocyanate monomers from the resultant after the end of the reaction.

Alternatively, the above-mentioned reactions may be conducted separately, and each of the resultant polyisocyanates may be mixed such that the molar ratios of each of the functional groups are within the above-mentioned range. It is preferable the above-mentioned reactions be conducted simultaneously to obtain a polyisocyante from the viewpoint of preparation ease, and the above-mentioned reactions be conducted separately, followed by mixing the resultants from the viewpoint than the molar ratios of each of the functional groups are adjusted freely.

Examples of a catalyst to be used to induce a polyisocyanate containing an isocyanurate group from diisocyanate monomers include generally available isocyanurate-forming reaction catalysts. Although there are no particular limitations on the isocyanurate-forming reaction catalyst, the isocyanurate-forming reaction catalyst generally preferably has a basicity, and examples thereof include: (1) hydroxides of tetraalkylammonium such as tetramethylammonium, tetraethylammonium, and tetrabutylammonium; and salts of organic weak acid, such as acetic acid, octylic acid, myristic acid, or benzoic acid, (2) hydroxides of hydroxyalkylammonium such as trim ethyl hydroxy ethyl ammonium, trimethylhydroxypropylammonium, triethylhydroxyethylammonium, or triethylhydroxypropylammonium; salts of organic weak acid, such as acetic acid, octylic acid, myristic acid, or benzoic acid, (3) metal (such as tin, zinc, or lead) salts of alkylcarboxylic acids such as acetic acid, caproic acid, octylic acid, or myristic acid, (4) metal alcoholates of sodium, potassium, or the like, (5) aminosilyl group-containing compounds such as hexamethylene disilazane, (6)Mannich bases, (7) combination of tertiary amines with epoxy compounds, and (8) phosphorus-based compounds such as tributylphosphine.

Among these, organic weak acid salts of quaternary ammonium, and more preferably organic weak acid salts of tetraalkylammonium, are preferable from the viewpoint of difficulty in by-product generation.

The amount of the isocyanurate-forming reaction catalyst, relative to the mass of charged diisocyanate monomers, is preferably 10 ppm by mass to 1000 ppm by mass. The upper limit thereof is more preferably 500 ppm by mass, and even more preferably 100 ppm by mass. The isocyanurate-forming reaction temperature is preferably 50°C to 120°C, and more preferably 60°C to 90°C. In the case where the isocyanurate-forming reaction temperature is 120°C or less, there is a tendency in which coloring of the polyisocyanate can be effectively suppressed.

The isocyanurate-forming reaction may be terminated at a desired conversion rate (mass ratio of polyisocyanates formed by isocyanurate-forming reaction, relative to the mass of charged diisocyanate monomers) by adding an acid compound, such as a phosphoric acid or an acidic phosphoric acid, without particular limitations, to the resultant. The reaction needs to be terminated at an initial stage to obtain the polyisocyanate according to the present embodiment.

However, the reaction rate of the isocyanurate-forming reaction at an initial stage is very rapid, the termination of the reaction at the initial stage is difficult, and reaction conditions, particularly, the addition amount and the addition method of a catalyst, are required to be carefully selected.

For example, the split addition of a catalyst at a certain interval is preferably recommended.

Accordingly, the conversion rate of the isocyanurate-forming reaction to obtain the polyisocyanate available in the present embodiment is preferably 30% or less, more preferably 25% or less, and even more preferably 20% or less.

In the case where the conversion rate of the isocyanurate-forming reaction is 30% or less, there is a tendency in which the aliphatic and /or alicyclic polyisocyanate composition realizes low viscosity suitable for high solid formulation or solventless formulation.

Although there are no particular limitations on a catalyst to be used to induce a polyisocyanate containing an iminooxadiazinedione group from diisocyanate monomers, examples thereof include the following catalysts (1) and (2) which are generally known as iminooxadiazinedione-forming reaction catalysts.

(1) (Poly)hydrogen fluoride represented by formula: $M[F_n]$ or $M[F_n(HF)_m]$ (wherein m and n each represents integers satisfying the relationship m/n>0, and M represents a n-charged cation (mixture) or at least one radical having a valency of n in total), such as tetramethylammonium fluoride hydrate and tetraethylammonium fluoride.

(2) Compounds formed of: formula $R^1$-$CR'_2$-C(O)O- or $R^2$=CR'-C(O)O-(wherein, $R^1$ and $R^2$ represent, as needed, a branched, cyclic, and/or unsaturated C1-30 perfluoroalkyl group, R' is identically or differently selected from the group consisting of a hydrogen atom, C1-20 alkyl groups, and aryl groups, and has a hetero atom, as needed), such as 3,3,3-trifluoro-carboxylic acid; 4,4,4,3,3- pentafluorobutane acid, 5,5,5,4,4,3,3-heptafluoro pentanoic acid, and 3, 3-difluoroprop-2-enoic acid, with a quaternary ammonium cation or a quaternary phosphonium cation.

The catalysts (1) are preferable from the viewpoint of ease of availability and the catalysts (2) are preferable from the viewpoint of safety.
The amount of the iminooxadiazinedione-forming reaction catalyst, relative to the mass of charged diisocyanate monomers, is preferably 10 ppm by mass to 1000 ppm by mass.
The lower limit thereof is more preferably 20 ppm by mass, even more preferably 40 ppm by mass, and even more preferably 80 ppm by mass.
The upper limit thereof is more preferably 800 ppm by mass, even more preferably 600 ppm by mass, and even more preferably 500 ppm by mass.
The iminooxadiazinedione-forming reaction temperature is preferably 40°C to 120°C.
The lower limit thereof is more preferably 50°C, and even more preferably 55°C. The upper limit thereof is more preferably 100°C, even more preferably 90°C, and even more preferably 80°C.
In the case where the iminooxadiazinedione-forming reaction temperature is 40°C or more, there is a tendency in which a high reaction rate can be maintained. In the case where the iminooxadiazinedione-forming reaction temperature is 120°C or less, there is a tendency in which coloring of the polyisocyanate or the like can be effectively suppressed.
Although there are no particular limitations on a catalyst to be used to induce a polyisocyanate containing a uretdione group from diisocyanate monomers, examples thereof include: tertiary phosphines, such as trialkylphosphines such as tri-n-butylphosphine and tri-n-octylphosphine; tris(dialkylamino)phosphines such as tris-(dimethylamino)phosphine; and cycloalkylphosphines such as cyclohexyl di-n-hexylphosphine.
Most of the uretdione-forming reaction catalysts simultaneously promote an isocyanurate-forming reaction to produce isocyanurate group-containing polyisocyanates in addition to uretdione group-containing polyisocyanates. The uretdione-forming reaction may be terminated at a desired conversion rate (the mass ratio of polyisocyanates formed by a uretdione-forming reaction, relative to the mass of charged diisocyanate monomers) by adding a deactivator against the uretdione-forming reaction catalyst, such as a phosphoric acid or a methyl paratoluenesulfonate, without particular limitations, to the resultant. After the reaction is terminated, the resultant is filtrated, as needed.
In addition, uretdione groups may be obtained by heating diisocyanate monomers without using any of the above-mentioned uretdione-forming reaction catalysts. The uretdione-forming reaction temperature is preferably 120°C or more, more preferably 130°C to 170°C, and even more preferably 140°C to 160°C.
The uretdione-forming reaction time is preferably 30 minutes to 4 hours, more preferably 1 hour to 3 hours, and even more preferably 1 hour to 2 hours.
Although there are no particular limitations on a catalyst to be used to induce a polyisocyanate containing an allophanate group from diisocyanate monomers, examples thereof include: alkylcarboxylic acid salts of tin, lead, zinc, bismuth, zirconium, zirconyl, or the like; organic tin compounds such as tin 2-ethylhexanoate, and dibutyltin dilaurate; organic lead compounds such as lead 2-ethylhexanoate; organic zin compounds such as zinc 2-ethylhexanoate; bismuth 2-ethylhexanoate, zirconium 2-ethylhexanoate, and zirconyl 2-ethylhexanoate. One kind of these may be used alone or at least two thereof may be used in combination.
The above-mentioned isocyanurate-forming reaction catalysts may also serve as allophanate-forming reaction catalysts. In the case where the allophanate-forming reaction is conducted using the above-mentioned isocyanurate-forming reaction catalyst, an isocyanurate group-containing polyisocyanate is also generated. It is preferable that the above-mentioned isocyanurate-forming reaction catalyst be used as an allophanate-forming reaction catalyst to conduct the allophanate-forming reaction and the isocyanurate-forming reaction, from the viewpoint of economical productivity.
The formulation amount of the above-mentioned allophanate-forming reaction catalyst, relative to the mass of charged diisocyanate monomers, is preferably 10 ppm by mass to 1000 ppm by mass.
The lower limit thereof is more preferably 20 ppm by mass, even more preferably 40 ppm by mass, and even more preferably 80 ppm by mass.
The upper limit thereof is more preferably 800 ppm by mass, even more preferably 600 ppm by mass, and even more preferably 500 ppm by mass.
The allophanate-forming reaction temperature is preferably 40°C to 180°C. The lower limit thereof is more preferably 60°C, even more preferably 80°C, and even more preferably 100°C. The upper limit thereof is more preferably 160°C, and even more preferably 140°C.
In the case where the allophanate-forming reaction temperature is 40°C or more, there is a tendency in which a high reaction rate can be maintained. In the case where the allophanate-forming reaction temperature is 180°C or less, there is a tendency in which coloring of the polyisocyanate or the like can be effectively suppressed.

An alcohol available to form allophanate groups is preferably an alcohol constituted only by carbon, hydrogen and oxygen, more preferably monoalcohol, and even more preferably monoalcohol having a molecular weight of 200 or less. Although there are no particular limitations on the alcohol, specific examples thereof include: monoalcohols such as methanol, ethanol, propanol, butanol, pentanol, hexanol, heptanol, octanol, and nonanol; and diols such as ethylene glycol, 1,3-butanediol, neopentyl glycol, and 2-ethylhexane diol. One of these may be used alone or at least two thereof may be used in combination.

The above-mentioned isocyanurate-forming reaction, iminooxadiazinedione-forming reaction, uretdione-forming reaction, and allophanate-forming reaction may be conducted sequentially, or some of them may be conducted concurrently. It is preferable that the isocyanurate-forming reaction be conducted in advance, followed by conducting the uretdione-forming reaction. It is more preferable that the isocyanurate-forming reaction be conducted in advance and then the uretdione-forming reaction be conducted by heat, which can realize simplification of preparation processes.

The polyisocyanate available in the present embodiment may be obtained by removing unreacted diisocyanate monomers from the reaction liquid after the end of the reaction by conducting thin-film distillation or extraction.

In order to induce a polyisocyanate containing biuret groups from diisocyanate monomers, a polyisocyanate having biuret-bonds is obtained by reacting a biuret-forming agent such as water, t-butanol or urea, with diisocyanate monomers, at a molar ratio, (the biuret-forming agent) / (isocyanate groups of the diisocyanate monomers), of approximately 1/2 to 1/100, followed by removing unreacted diisocyanate monomers from the resultant. The processes are disclosed, for example, in Japanese Unexamined Patent Application, First Publication No. Sho 53-106797, Japanese Unexamined Patent Application, First Publication No. Sho 55-11452 and Japanese Unexamined Patent Application, First Publication No. Sho 59-95259.

Examples of the method for inducing a polyisocyanate containing uretone imino groups from diisocyanate monomers include: a method in which the above-mentioned isocyanurate-forming reaction is conducted, and then a catalyst is deactivated, followed by maintaining the temperature of the resultant at approximately 140°C to 160°C for several hours to allow the reaction to proceed; and a method in which a polyisocyanate composition obtained by conducting a reaction at approximately 20°C to 80°C for several hours to several tens of hours using a hetero ring-containing phosphorus-based compound, such as 1-butyl phosphorene, as a catalyst, is partially mixed. Among the above-mentioned methods, it is preferable that the former isocyanurate-forming reaction be conducted, and then a catalyst be deactivated, followed by maintaining the temperature of the resultant at approximately 140°C to 160°C for several hours to allow the reaction to proceed, from the viewpoint of ease of availability.

An antioxidant or an ultraviolet absorber may be added to the obtained polyisocyanate, so as to suppress coloring when being stored, for example. Examples of the antioxidant include hindered phenols such as 2,6-di-t-butyl-p-cresol, and examples of the ultraviolet absorber include benzotriazole and benzophenone. One of these may be used alone, or at least two thereof may be used in combination. The addition amount thereof is preferably 10 ppm by mass to 500 ppm by mass.

<Other constitution components>

[Polyvalent active hydrogen compound]

The polyaspartic coating composition according to the present embodiment may further contain a polyvalent active hydrogen compound as a resin component other than the aspartic acid ester compound (A) and the polyisocyanate composition (B1).

Although there are no particular limitations on the polyvalent active hydrogen compound available in the present embodiment, at least one selected from the group consisting of polyols, polyamines and alkanolamines, for example, and, among these, it is more preferable that polyols be contained.

Although there are no particular limitations on the polyol, examples thereof include polyester polyol, acrylic polyol, polyether polyol, polyolefin polyol, fluorinated polyol, polycarbonate polyol, and polyurethane polyol. One of the above-mentioned polyols may be used alone, or at least two thereof may be used in combination.

Although there are no particular limitations on the polyester polyol, examples thereof include: polyester polyols obtained by condensation reaction of at least one diprotic acid selected from the group consisting of carboxylic acids, such as succinic acid, adipic acid, sebacic acid, dimer acid, maleic anhydride, phthalic anhydride, isophthalic acid, and terephthalic acid, with at least one polyvalent alcohol selected from the group consisting of ethylene glycol, propylene glycol, diethylene glycol, neopentyl glycol, trimethylolpropane, and glycerin, and polycaprolactones obtained by ring-opening polymerization of ε-caprolactone using a polyvalent alcohol.

Although there are no particular limitations on the acrylic polyol, examples thereof include ones obtained by copolymerizing at least one of ethylenically unsaturated bonding-containing monomers containing a hydroxyl group, for example, with at least one of additional ethylenically unsaturated bonding-containing monomers copolymerizable therewith.

Although there are no particular limitations on the ethylenically unsaturated bonding-containing monomer having a hydroxyl group, examples thereof include: hydroxyethyl acrylate, hydroxypropyl acrylate, hydroxybutyl acrylate, hydroxyethyl methacrylate, hydroxypropyl methacrylate, and hydroxybutyl methacrylate, and preferable examples thereof include hydroxyethyl acrylate and hydroxyethyl methacrylate.

Although there are no particular limitations on the additional ethylenically unsaturated bonding-containing monomer copolymerizable with the above-mentioned monomer, examples thereof include: acrylic acid esters such as methyl acrylate, ethyl acrylate, propyl acrylate, isopropyl acrylate, n-butyl acrylate, isobutyl acrylate, n-hexyl acrylate, cyclohexyl acrylate, 2-ethylhexyl acrylate, lauryl acrylate, benzyl acrylate, and phenyl acrylate; methacrylic acid esters such as methyl methacrylate, ethyl methacrylate, propyl methacrylate, isopropyl methacrylate, n-butyl methacrylate, isobutyl methacrylate, n-hexyl methacrylate, cyclohexyl methacrylate, 2-ethylhexyl methacrylate, lauryl methacrylate, benzyl methacrylate, and phenyl methacrylate; unsaturated carboxylic acids such as acrylic acid, methacrylic acid, maleic acid, and itaconic acid; unsaturated amides, such as acrylamide, methacrylamide, N,N-methylene bisacrylamide, diacetone acrylamide, diacetone methacrylamide, maleic acid amide, and maleimide; vinyl-based monomers such as glycidyl methacrylate, styrene, vinyltoluene, vinyl acetate, acrylonitrile, and dibutyl fumarate; and hydrolyzable silyl group-containing vinyl-based monomers, such as vinyltrimethoxysilane, vinylmethyldimethoxysilane, and $\gamma$-(meth)acryloxypropyltrimethoxysilane.

Although there are no particular limitations on the polyether polyols, examples thereof include: polyether polyols obtained by adding one or a mixture of alkylene oxides, such as ethylene oxide, propylene oxide, butylene oxide, cyclohexene oxide, or styrene oxide, to one or a mixture of polyvalent hydroxy compounds using a hydroxide of lithium, sodium, potassium, or the like, or a strong basic catalyst such an alcoholate or an alkylamine; polyether polyols obtained by reacting an alkylene oxide with a polyfunctional compound such as ethylenediamine; and polymer polyols obtained by polymerization of acrylamides using these polyethers as medium.

Examples of the above-mentioned polyvalent hydroxy compound include:

(1) diglycerin, ditrimethylol propane, pentaerythritol, and dipentaerythritol;
(2) sugar alcohol-based compounds such as erythritol, D-threitol, L-arabinitol, ribitol, xylitol, sorbitol, mannitol, galactitol, and rhamnitol;
(3) monosaccharides such as arabinose, ribose, xylose, glucose, mannose, galactose, fructose, sorbose, rhamnose, fucose, and ribodesose;
(4) disaccharides such as trehalose, sucrose, maltose, cellobiose, gentiobiose, lactose, and melibiose;
(5) trisaccharides such as raffinose, gentianose, and melicitose; and
(6) tetrasaccharides such as stachyose.

Although there are no particular limitations on the polyolefin polyol, examples thereof include: polybutadiene having at least two hydroxyl groups, hydrogenated polybutadiene, polyisoprene, and hydrogenated polyisoprene. The statistic number of hydroxyl groups of a single molecule of a polyol (hereinafter, abbreviated as "hydroxyl group average number") is preferably at least two. In the case where the hydroxyl group average number of a polyol is two or more, there is a tendency in which the decrease in the cross-link density of the resultant coating film is suppressed.

The fluorinated polyol is a polyol containing fluorine in a molecule thereof, and examples thereof include copolymers disclosed in Japanese Unexamined Patent Application, First Publication No. Sho 57-34107, or Japanese Unexamined Patent Application, First Publication No. Sho 61-275311, such as fluoroolefins, cyclic vinyl ethers, hydroxyalkylvinyl ethers, vinyl monocarboxylates, or the like.

Although there are no particular limitations on the polycarbonate polyol, examples thereof include ones obtained by condensation polymerization of: a dialkyl carbonate such as dimethyl carbonate; an alkylene carbonate such as ethylene carbonate; or a low-molecular-weight carbonate compound such as diaryl carbonate such as diphenyl carbonate; with a low-molecular-weight polyol used in the above-mentioned polyester polyol.

Although there are no particular limitations on the polyurethane polyol, examples thereof include ones obtained by conventionally reacting a polyol with a polyisocyanate. Examples of a polyol free from a carboxyl group include: low-molecular-weight ones such as ethylene glycol and propylene glycol; and high-molecular-weight ones such as acrylic polyol, polyester polyol, and polyether polyol.

Although there are no particular limitations on the hydroxyl value of the above-mentioned polyol per resin, the hydroxyl value is preferably 10 mgKOH / resin g to 300 mgKOH / resin g. In the case where the hydroxyl value is 10 mgKOH / resin g or more, there is a tendency in which the decrease in the cross-link density is suppressed and intended physical properties can be sufficiently achieved. In the case where the hydroxyl value is 300 mgKOH / resin g or less, there is a tendency in which an excessive increase in the cross-link density is suppressed, and the mechanical strength of a coating film can be maintained.

The hydroxyl value may be measured in accordance with JIS K1557.

Among the above-mentioned polyols, acrylic polyol and polyester polyol are preferable. In the polyaspartic

coating composition using a polyol, the equivalent ratio of isocyanate groups and hydroxyl groups is preferably 10:1 to 1:10.

Although there are no particular limitations on the polyamine, the polyamine preferably has at least two primary amino groups or secondary amino groups in a molecule thereof, and more preferably has at least three primary amino groups or secondary amino groups in a molecule thereof.

Specific examples of the polyamine, without particular limitations, include: diamines, such as ethylenediamine, propylenediamine, butylenediamine, triethylenediamine, hexamethylenediamine, 4,4'-diaminodicyclohexylmethane, piperazine, 2-methylpiperazine, and isophorone diamine; chained polyamines having at least three amino groups, such as bishexamethylene triamine, diethylene triamine, triethylenetetramine, tetraethylenepentamine, pentamethylenehexamine, and tetrapropylenepentamine; and cyclic polyamines such as 1,4,7,10,13,16-hexaazacyclooctadecane, 1,4,7,10-tetraazacyclodecane, 1,4,8,12-tetraazacyclopentadecane, and 1,4,8,11-tetraazacyclotetradecane.

The alkanolamine is a compound having an amino group and a hydroxyl group in a molecule thereof. Although there are no particular limitations on the alkanolamine, examples thereof include monoethanolamine, diethanolamine, aminoethylethanolamine, N-(2-hydroxypropyl)ethylenediamine, mono-, di-(n- or iso-)propanolamine, ethylene glycol bispropylamine, neopentanolamine, and methylethanolamine.

[Other components]

The polyaspartic coating composition according to the present embodiment may further contain ready-made melamine resin, epoxy resin, or polyurethane resin, as needed. In the case where the above-mentioned polyol has a carboxyl group, an oxazoline group-containing compound, or a carbodiimide group-containing compound may be formulated. In the case where the above-mentioned polyol has a carbonyl group, a hydrazide group-containing compound or a semicarbazide group-containing compound may be formulated. One of these compounds may be formulated alone, or at least two thereof may be formulated in combination.

The polyaspartic coating composition according to the present embodiment may further contain: an antioxidant such as hindered phenol; an ultraviolet absorber such as benzotriazole or benzophenone; a pigment such as titanium oxide, carbon black, indigo, quinacridone, or pearl mica; a powdered pigment of metal such as aluminum; a rheology-controlling agent such as hydroxyethyl cellulose, a urea compound, or a microgel; or a curing accelerator, such as a tin compound, a zinc compound, or an amine compound, as needed.

<Preparation method of polyaspartic coating composition>

The polyaspartic coating composition according to the present embodiment may be obtained by conventionally mixing the above-mentioned aspartic acid ester compound (A) and the above-mentioned polyisocyanate composition (B1), and, as needed, additional constitution components.

A polyaspartic coating composition according to the second embodiment, which is according to the present invention, contains: (A) an aspartic acid ester compound of formula (I); and (B2) a polyisocyanate composition containing a triisocyanate compound (b1) of formula (VIII), in which the content of the triisocyanate compound (b1), relative to the total mass of the polyisocyanate composition (B2), is 40% by mass to 100% by mass.

In the present embodiment, the description relating to the same constituents as those of the first embodiment may be omitted.

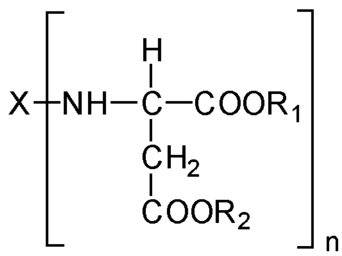

(I)

[0103]

In the formula (I), X, n, $R_1$ and $R_2$ are the same as described in the first embodiment.

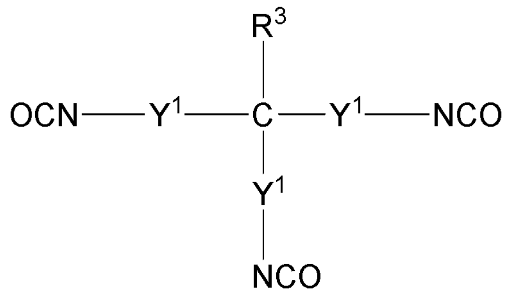

(VIII)

In the formula (VIII), plural $Y^1$ each independently represents a single bond, or a C1-20 divalent hydrocarbon group which may have at least one selected from the group consisting of an ester structure and an ether structure. The plural $Y^1$ are identical to or different from each other. $R^3$ is a hydrogen atom or a C1-12 monovalent hydrocarbon group.

[Triisocyanate compound (b1)]

The polyisocyanate composition (B2) contained in the polyaspartic coating composition according to the present embodiment contains the triisocyanate compound (b1) of the formula (VIII).

($Y^1$)

In the formula (VIII), plural $Y^1$ each independently represents a single bond, or a C1-20 divalent hydrocarbon group which may have at least one selected from the group consisting of an ester structure and an ether structure. The plural $Y^1$ are identical to or different from each other.

The C1-20 divalent hydrocarbon group may be an aliphatic group or an aromatic group. The aliphatic group may be straight-chained, branched, or cyclic. Examples of the straight-chained or branched aliphatic group include alkanediyl groups (alkylene groups) and alkylidene groups.

Examples of the cyclic aliphatic group include cycloalkylene groups.

Examples of the aromatic group include arylene groups such as phenylene group.

Among these, the C1-20 divalent hydrocarbon group is preferably an alkylene group.

Examples of the alkylene group include methylene group, dimethylene group, trimethylene group, tetramethylene group, ethylene group, n-propylene group, and n-butylene group.

Examples of the C1-20 divalent hydrocarbon group which may have at least one selected from the group consisting of an ester structure and an ether structure, as $Y^1$, include groups of formula (VIII-1) (hereinafter, may be abbreviated as "group (VIII-1)").

$$*^1\text{-}(CH_2)_{n1}\text{-}Y^2\text{-}(CH_2)_{n2}\text{-}*^2 \qquad \text{(VIII-1)}$$

In the group (VIII-1), $*^1$ represents a bond with C in the formula (VIII), and $*^2$ represents a bond with N of NCO in the formula (VIII). In addition, n1 and n2 are integers satisfying the relationships: $1 \leqq n1+n2 \leqq 20$. That is, at least one of n1 and n2 is not 1 and n2 is preferably 1 or more.

n1 is an integer of 0 to 20, preferably 0 to 19, more preferably 0 to 4, and even more preferably 0 to 2. n2 is an integer of 0 to 20, preferably 1 to 20, more preferably 1 to 4, and even more preferably 1 or 2. The combination of n1 and n2 is preferably a combination in which n1 is 0 and n2 is 2, or a combination in which n1 is 2 and n2 is 2.

In the group (VIII-1), $Y^2$ represents an ester structure (-C(=O)-O-) or an ether structure (-O-). Among these, $Y^2$ preferably represents an ester structure because the reaction rate is increased.

In the case where at least one of the plural $Y^1$ has at least one selected from the group consisting of aliphatic groups and aromatic groups, the viscosity of the polyisocyanate composition can be further decreased, and the weather resistance formed by the polyaspartic coating composition according to the present embodiment can be further improved.

In the case where at least one of the plural $Y^1$ has an ester structure, the heat resistance of the polyisocyanate composition can be further improved and the reactivity of isocyanate groups can be further improved.

In the case where at least one of the plural $Y^1$ is formed by hydrocarbon groups only (preferably, in the case where all of the plural $Y^1$ are formed by hydrocarbon groups only), the hydrolysis resistance of the polyisocyanate composition can be further improved.

($R^3$)

$R^3$ is a hydrogen atom or a C1-12 monovalent hydrocarbon group. There are no particular limitations on the hydrocarbon group as $R^3$, and examples thereof include alkyl groups, alkenyl groups, and alkynyl groups. Among these, $R^3$ is preferably a hydrogen atom.

In the case where at least one of the plural $Y^1$ has at least one selected from the group consisting of aliphatic groups and aromatic groups, specific preferable examples of the triisocyanate compound (II) include 4-isocyanate methyl-1,8-octamethylene diisocyanate (hereinafter, abbreviated as "NTI", having a molecular weight of 251) disclosed in Japanese Examined Patent Application, Second Publication No. Sho 63-15264 (Reference document 1), 1,3,6-hexamethylene triisocyanate (hereinafter, abbreviated as "HTI", having a molecular weight of 209) disclosed in Japanese Unexamined Patent Application, First Publication No. Sho 57-198760 (Reference document 2), bis(2-isocyanatoethyl) 2-isocyanatoglutarate (hereinafter, abbreviated as "GTI", having a molecular weight of 311) disclosed in Japanese Examined Patent Application, Second Publication No. Hei 4-1033 (Reference document 3), and lysine triisocyanate (hereinafter, abbreviated as "LTI", having a molecular weight of 267) disclosed in Japanese Unexamined Patent Application, First Publication No. Sho 53-135931 (Reference document 4).

Among these, NTI, GTI or LTI is preferable, NTI or LTI is more preferable, and LTI is even more preferable, as the triisocyanate compound (b1), from the viewpoint that the reactivity of isocyanate groups can be further improved, when at least one of the plural $Y^1$ has at least one selected from the group consisting of aliphatic groups and aromatic groups.

In the present embodiment, at least one of the plural $Y^1$ has an ester structure, and specific preferable examples of the triisocyanate compound (b1) include GTI (having a molecular weight of 311) disclosed in Japanese Examined Patent Application, Second Publication No. Hei 4-1033 (Reference document 3), and LTI (having a molecular weight of 267) disclosed in Japanese Unexamined Patent Application, First Publication No. Sho 53-135931 (Reference document 4).

In the case where at least one of the plural $Y^1$ is formed by only (a) hydrocarbon group(s) in the present embodiment, specific preferable examples of the triisocyanate compound (b1) include NTI (having a molecular weight of 251) disclosed in Japanese Examined Patent Application, Second Publication No. Sho 63-15264 (Reference document 1) and HTI (having a molecular weight of 209) disclosed in Japanese Unexamined Patent Application, First Publication No. Sho 57-198760 (Reference document 2).

(Content of triisocyanate compound (b1))

In the present embodiment, the lower limit of the content of the triisocyanate compound (b1), relative to the total mass of the polyisocyanate composition (B2), is 40% by mass, more preferably 60% by mass, and even more preferably 80% by mass. In the case where the content of the triisocyanate compound (b1), relative to the total mass of the polyisocyanate composition (B2), is the above-mentioned lower limit or more, the hardness of a coating film formed by curing the polyaspartic coating composition according to the present embodiment can be further improved.

In contrast, there are no particular limitations on the upper limit of the content of the triisocyanate compound (b1), relative to the total mass of the polyisocyanate composition (B2), and the upper limit may be 100% by mass, for example.

(Molecular weight of triisocyanate compound (b1))

In the present embodiment, the lower limit of the molecular weight of the triisocyanate compound (b1) is preferably 139, more preferably 150, even more preferably 180, and particularly preferably 200.

In contrast, the upper limit of the molecular weight of the triisocyanate compound (b1) is preferably 1000, more preferably 800, even more preferably 600, and particularly preferably 400.

That is, the molecular weight of the triisocyanate compound (b1) is preferably 139 to 1000, more preferably 150 to 800, even more preferably 180 to 600, and particularly preferably 200 to 400.

In the case where the molecular weight of the triisocyanate compound (b1) is the above-mentioned lower limit or more, the crystalline nature thereof can be further suppressed. In the case where the molecular weight of the triisocyanate compound (b1) is the above-mentioned upper limit or less, the viscosity thereof can be further decreased.

(Preparation method of triisocyanate compound (b1))

In the present embodiment, the triisocyanate compound (b1) contained in the polyisocyanate composition (B 2) may be obtained, for example, by subjecting an amino acid derivative or an amine such as ether amine or alkyltriamine to isocyanate-forming reaction.

Examples of the amino acid derivative include 2,5-diaminovaleric acid, 2,6-diaminohexanoic acid, asparaginic acid, and glutamic acid. These amino acid derivatives are diamine monocarboxylates or monoamine dicarboxylate, and therefore these amino acid derivatives can be made to be triamines having an ester structure by esterifying a carboxyl group thereof with an alkanol amine such as ethanol amine. Thus, a triamine having a resultant ester structure can be made to be a triisocyanate compound having an ester structure by phosgenation of the amine or the like.
Examples of the ether amine include polyoxyalkylenetriamine manufactured by MITSUI FINE CHEMICAL Inc., under the trade name of "D403". The ether amines are triamines, and may be made to be triisocyanate compounds each having an ether structure by phosgenation of the amines or the like.
Examples of the alkyltriamine include triisocyanatononane (4-aminomethyl-1,8-octanediamine). These alkyltriamines are triamines, and can be made to be triisocyanate compounds having only hydrocarbon by phosgenation of the amines.

[Polyisocyanate (b2)]

The polyisocyanate composition (B2) contained in the polyaspartic coating composition according to the present embodiment may further comprise a polyisocyanate (b2) obtained from at least one diisocyanate selected from the group consisting of aliphatic diisocyanates and alicyclic diisocyanates in addition to the above-mentioned triisocyanate compound (b1). The phrase "polyisocyanate obtained from diisocyanates" refers to a reactant (polyisocyanate) having plural isocyanate groups obtained by binding plural diisocyanates.
The aliphatic diisocyanates and the alicyclic diisocyanates used in the present embodiment may be the same as those used in the first embodiment.

(Content of polyisocyanate (b2))

The upper limit of the content of the polyisocyanate (b2), relative to the total mass of the polyisocyanate composition (B2), according to the present embodiment is preferably 60% by mass, even more preferably 40% by mass, and even more preferably 20% by mass.
In the case where the content of the polyisocyanate (b2) is the above-mentioned upper limit or less, the hardness of a coating film formed by curing the polyaspartic coating composition according to the present embodiment can be further improved.
In contrast, there are no particular limitations on the lower limit of the polyisocyanate (b2), relative to the total mass of the polyisocyanate composition (B2), and may be 0% by mass, for example.

[Preparation method of polyisocyanate (b2)]

The polyisocyanate (b2) according to the present embodiment may be obtained, for example, by simultaneously conducting an isocyanurate-forming reaction to form isocyanurate groups, an iminooxadiazinedione-forming reaction to form iminooxadiazinedione groups, a uretdione-forming reaction to form uretdione groups, an allophanate-forming reaction to form allophanate groups, a biuret-forming reaction to form biuret groups, and/or, a uretone imino-forming reaction to form uretone imino groups, in the presence of an excessive amount of diisocyanates, followed by removing unreacted diisocyanates after the end of the reactions. That is, the polyisocyanate obtained by the above-mentioned reactions is a reactant in which a plurality of the above-mentioned diisocyanates are bonded, the reactant having at least one selected from the group consisting of isocyanurate groups, iminooxadiazinedione groups, uretdione groups, allophanate groups, biuret groups, and uretone imino groups.
In addition, the above-mentioned reactions may be conducted separately, and the resultant polyisocyanates may be mixed at a particular ratio.
Among these, the above-mentioned reactions are preferably conducted simultaneously to obtain a polyisocyante from the viewpoint of preparation ease, whilst the above-mentioned reactions are preferably conducted separately, followed by mixing the resultants, from the viewpoint that the molar ratios of each of the functional groups can be controlled freely.
It is preferable that the molar ratios of each of the functional groups in the polyisocyanate be approximately the same as those in the first embodiment.

<Physical properties of polyisocyanate composition (B2)>

It is preferable that the physical properties (the isocyanate content, the viscosity, the number-average molecular weight, and the isocyanate group average number) of the polyisocyanate composition (B2) contained in the polyaspartic coating composition according to the present embodiment be approximately the same as those in the first embodiment.

<Additional constitution components>

The same components as those in the first embodiment may be formulated.

<Preparation method of polyaspartic coating composition>

The polyaspartic coating composition according to the present embodiment may be obtained by conventionally mixing (A) the above-mentioned aspartic acid ester compound (I), and (B2) the above-mentioned polyisocyanate composition containing the triisocyanate compound (b1), and, as needed, additional resin components and the like.

<Usage>

The polyaspartic coating composition according to the present invention may be preferably used as a primer, intermediate, or upper coating material to be applied on metal such as a steel plate or surface-treated steel plate, plastic, ceramic of inorganic material or the like, glass, or concrete, by roll coating, curtain flow coating, spray coating, electrostatic coating, bell coating, immersion, roller coating, brush coating or the like. The polyaspartic coating composition is preferably used to impart an aesthetically pleasing appearance, weather resistance, acid resistance, rust resistance, chipping resistance, adhesiveness, or the like. Moreover, the polyaspartic coating composition is also useful as an adhesive, tackifier, elastomer, foam, surface-treating agent, or the like.

[Coating film, coating article]

A coating film according to the present invention is formed using the polyaspartic coating composition according to the above description. A coating article according to the present invention includes the coating film according to the present invention. Although there are no particular limitations, the coating film may be formed, for example, by subjecting the polyaspartic coating composition to coating such as roll coating, curtain flow coating, spray coating, electrostatic coating, bell coating, immersion, roller coating, or brush coating, followed by drying the resultant at ordinary temperature or conducting a baking step.

EXAMPLES

Hereinafter, although the present invention will be described further specifically by showing examples, the present invention is not limited to these examples. Hereinafter, measuring methods of each of the physical properties and evaluation methods will be described. The terms "parts" and "%" mean "parts by mass" and "% by mass", respectively, unless otherwise specified.

(Physical property 1) NCO content (% by mass)

The NCO content of polyisocyanate (isocyanate content, % by mass) was measured as described below. 1 to 3 g of a polyisocyanate prepared in each preparation example was accurately weighed (W g) in a conical flask, and then 20 ml of toluene was added thereto to dissolve the polyisocyanate therein completely. Then, 10 mL of a toluene solution of 2N di-n-butylamine was added thereto, and then mixed completely, followed by leaving the mixture at room temperature for 15 minutes. Then, 70 mL of isopropyl alcohol was added thereto, and then mixed completely. The solution was subjected to titration with a IN hydrochloric acid solution (Factor F) using an indicator to obtain a titration value $V_2$ mL. In addition, a titration value $V_1$ mL was obtained by titration conducted in a similar manner to that described above except that no polyisocyanate was used. The NCO content of the polyisocyanate was calculated using the obtained titration value $V_2$ mL and the titration value $V_1$ mL, in accordance with the following equation.

$$\text{NCO content} = (V_1 - V_2) \times F \times 42 / (W \times 1000) \times 100$$

(Physical property 2) Viscosity (mPa.s)

The viscosity of the polyisocyanate was measured at 25°C using an E-type viscometer (trade name: RE-85R, manufactured by Tokimec, Inc.). The measurement was conducted using a standard rotor (1°34' × R24). The rotation speed was set as described below.

100 r.p.m. (in the case where the viscosity was less than 128 mPa.s.)

50 r.p.m. (in the case where the viscosity was 128 mPa.s or more and less than 256 mPa.s.)
20 r.p.m. (in the case where the viscosity was 256 mPa.s or more and less than 640 mPa.s.)
10 r.p.m. (in the case where the viscosity was 640 mPa.s or more and less than 1280 mPa.s.)
5 r.p.m. (in the case where the viscosity was 1280 mPa.s or more and less than 2560 mPa.s.)
2.5 r.p.m. (in the case where the viscosity was 2560 mPa.s or more and less than 5184 mPa.s.)
10 r.p.m. (in the case where the viscosity was 5184 mPa.s or more and less than 12960 mPa.s.)
0.5 r.p.m. (in the case where the viscosity was 12960 mPa.s or more and less than 25920 mPa.s.)

(Physical property 3) Number-average molecular weight

The number-average molecular weight of the polyisocyanate was determined based on polystyrene standard by gel permeation chromatography (hereinafter, abbreviated as "GPC") using a device described below.
Device: "HLC-8120 GPC" (trade name) manufactured by Tosoh Corporation
Column: manufactured by Tosoh Corporation,
"TSK GEL Super H1000" (trade name) × 1,
"TSK GEL Super H2000" (trade name) × 1, and
"TSK GEL Super H3000" (trade name) × 1.
Carrier: Tetrahydrofuran
Detection method: Differential refractometer

(Physical property 4) Isocyanate group average number

**[0189]** The isocyanate group average number of the polyisocyanate was calculated using the NCO content determined in the (physical property 1) and the number-average molecular weight determined in the (physical property 3) in accordance with the below-shown equation.

$$\text{Isocyanate group average number} = \text{Number-average molecular weight} \times \text{NCO content} / 100 / 42$$

(Physical property 5) Content of diisocyanate monomers (% by mass)

The content of the diisocyanates of the polyisocyanate was determined as described below. At first, approximately 1 g of a sample was accurately weighed in a 20 mL sample bottle put on digital scales. Then, 0.03 g to 0.04 g of accurately weighed nitrobenzene (internal standard solution) was added thereto. Finally, approximately 9 ml of ethyl acetate was added thereto, a lid was put thereon, and then the resultant was mixed completely to prepare a sample. The prepared sample was analyzed with gas chromatography under the following conditions to determine the quantity.
Device: "GC-8A" manufactured by SHIMADZU Corporation
Column: "Silicone OV-17" manufactured by Shinwa Chemical Industries Ltd.
Column oven temperature: 120°C
Injection / detector temperature: 160°C

(Physical property 6) Each molar ratio

The molar ratios of an isocyanurate group, iminooxadiazinedione group, uretdione group, allophanate group, biuret group, and a uretone imino group were each determined by conducting $^{13}$C-NMR measurement using Biospin Avance 600 (trade name) manufactured by Bruker Corporation. Specific measurement conditions are described below.
$^{13}$C-NMR device: Avance 600 (manufactured by Bruker Corporation.)
Cryo Probe (manufactured by Bruker Corporation.)
CPDUL
600S3-C / H-D-05Z

Resonance frequency: 150 MHz
Concentration: 60 wt / vol %
Shift standard: $CDCl_3$ (77 ppm)
Accumulation number: 10000
Pulse program: zgpg 30 (proton complete decoupling method, latency time was 2 seconds.)

Each molar ratio was determined by dividing integral values of signals shown below by measured carbon numbers.

Molar ratio of isocyanurate group (% by mole, indicated as "A"): at around 148.6 ppm: integral value ÷ 3
Molar ratio of iminooxadiazinedione group (% by mole, indicated as "B"): at around 144.6 ppm: integral value ÷ 1
Molar ratio of uretdione group (% by mole, indicated as "C"): at around 157.5 ppm: integral value ÷ 2
Molar ratio of allophanate group (% by mole, indicated as "D"): at around 154 ppm: integral value ÷ 1
Molar ratio of biuret group (% by mole, indicated as "E"): at around 156 ppm: integral value ÷ 2
Molar ratio of uretone imino group (% by mole, indicated as "F"): at around 159.5 ppm: integral value ÷ 1

Each of the polyisocyanate compositions was used as samples to obtain the following 6 kinds of molar ratio.

$$\text{Molar ratio } x = (B+C+D) / (A+B+C+D)$$

$$\text{Molar ratio } b = B / (A+B+C+D)$$

$$\text{Molar ratio } c = C / (A+B+C+D)$$

$$\text{Molar ratio } d = D / (A+B+C+D)$$

$$\text{Molar ratio } e = E / A$$

$$\text{Molar ratio } f = F / (A+B+C+D)$$

(Physical property 7, Physical property 8) Contents of uretdione dimer and monoalcohol allophanate body

The contents of a uretdione dimer and monoalcohol allophanate body were determined by GPC measurement described in the description relating to (physical property 3) number-average molecular weight.

The peak area % corresponding to the double molecular weight of the diisocyanates used as starting materials was measured as the content of the uretdione dimer.

The peak area % corresponding to the double molecular weight of the diisocyanates and monoalcohol used as starting materials was measured as the content of monoalcohol allophanate body.

(Evaluation 1) High solid property

The high solid property was evaluated based on the viscosity at 25°C of a polyisocyanate composition in accordance with the following criteria.

◎: The viscosity was less than 500 mPa.s.
◦: The viscosity was 500 mPa.s or more but less than 1000 mPa.s.
△: The viscosity was 1000 mPa.s or more but less than 1200 mPa.s.
×: The viscosity was 1200 mPa.s or more.

(Evaluation 2) Curability

"Desmophen 1420" (aspartic acid ester compound, trade name manufactured by Covestro, an amine value thereof was 201 mgKOH / resin g) and "Desmophen 1520" (aspartic acid ester compound, trade name manufactured by Covestro, an amine value thereof was 191 mgKOH / resin g) were blended at a mass ratio of 1/1 in advance. The blended aspartic acid ester compounds and a polyisocyanate composition were mixed such that NCO / NH became 1.1, followed by adding n-butyl acetate to the mixture such that the solid content in a coating composition became 90% by mass, to obtain a polyaspartic coating composition. The obtained polyaspartic coating composition was applied on a polypropylene (PP) plate using an applicator such that the dried film thickness became 80 μm to 100 μm, followed by drying the resultant at 23°C for 24 hours to obtain a cured coating film. The resultant cured coating film was peeled from the PP plate, and immersed in acetone at 23°C for 24 hours, followed by calculating a ratio (gel fraction) of the mass of an undissolved portion relative to the mass thereof before immersion to evaluate the curability in accordance with the following criteria.

◎: The gel fraction was 80% or more.
◦: The gel fraction was 70% or more but less than 80%.
△: The gel fraction was 60% or more but less than 70%.
×: The gel fraction was less than 60%.

(Evaluation 3) Chemical resistance

A polyaspartic coating composition prepared by the same way as that of evaluation 2 was applied on a glass plate using an applicator such that the dried film thickness became 80 μm to 100 μm, followed by drying the resultant at 23°C for 7 days to obtain a cured coating film. Then, a cotton ball into which xylene was instilled was placed on the coating film for 1 minute, followed by evaluating the change in the external appearance of the coating film.

◦: There was no change in the external appearance of the coating film.
△: There was a little change in the external appearance of the coating film.
×: There was a change in the external appearance of the coating film.

(Evaluation 4) Weather resistance

A commercially-available solvent-based two-liquid acrylic urethane white enamel coating material was applied on an aluminum plate by spray-coating, baked at 80°C for 2 hours, and left still at room temperature for two weeks or more, followed by polishing the surface of the resultant using a sandpaper #1000 until the 60 degree gloss value became 10% or less to prepare a white plate as a base material. On the base material, a polyaspartic coating composition prepared by the same way as that of the evaluation 2 was applied using an applicator such that the dried film thickness became 80 μm to 100 μm, followed by drying the resultant at 23°C for 7 days to obtain a cured coating film. Then, evaluation was conducted under conditions described in JIS K5600-7-8 using Dew panel optical control weather meter FDP manufactured by Suga Test Instruments Co., Ltd.

◦: The retention ratio of 60 degree gloss after exposure for 1500 hours was 90% or more.
△: The retention ratio of 60 degree gloss after exposure for 1500 hours was 80% or more but less than 90%.
×: The retention ratio of 60 degree gloss after exposure for 1500 hours was less than 80%.

(Evaluation 5) Pot life

A polyaspartic coating composition prepared by the same way as that of evaluation 2 was left at 23°C to measure the time required by the polyaspartic coating composition to gelate, and then the pot life was evaluated in accordance with the following criteria.

◎: The gelation time was 150 minutes or more.
◦: The gelation time was 120 minutes or more but less than 150 minutes.
△: The gelation time was 90 minutes or more but less than 120 minutes.
×: The gelation time was less than 90 minutes.

(Evaluation 6) Hardness

A polyaspartic coating composition prepared by the same way as that of evaluation 2 was applied on a glass plate using an applicator such that the dried film thickness became 80 μm to 100 μm, followed by drying the resultant at 23°C for 24 hours to obtain a cured coating film. The Koenig pendulum hardness of the obtained cured coating film was measured at 23°C using a pendulum hardness meter manufactured by BYK Chemie GmbH, and evaluated in accordance with the following criteria.

◎: The Koenig pendulum hardness was 120 or more.
◦: The Koenig pendulum hardness was 110 or more but less than 120.
△: The Koenig pendulum hardness was 100 or more but less than 110.
×: The Koenig pendulum hardness was less than 100.

(Evaluation 7) Drying characteristic

A polyaspartic coating composition prepared by the same way as that of evaluation 2 was applied on a glass plate using an applicator such that the dried film thickness became 80 μm to 100 μm, followed by drying the resultant film at 23°C to evaluate the drying characteristic in terms of the time required to make the film tack-free in accordance with the following criteria.

◦: The time was less than 60 minutes.
△: The time was 60 minutes or more but less than 120 minutes.
×: The time was 120 minutes or more.

[Preparation Example 1-1]

100 parts of HDI was charged in a four-necked flask equipped with a stirrer, a thermometer, a reflux condenser, a nitrogen inlet tube, and a dropping funnel, under nitrogen atmosphere, and stirring was conducted while maintaining the temperature in the reactor at 60°C. 0.15 parts of a solution obtained by diluting an isocyanurate-forming reaction catalyst, tetrabutylammonium acetate, with 2-ethyl-1-hexanol to 10% by mass was added to the resultant, to allow the isocyanurate-forming reaction to proceed, and then a phosphoric acid was added to the reaction liquid to terminate the reaction when the NCO content of the reaction liquid became 43.8% by mass. Thereafter, the reaction liquid was maintained at 90°C for 1 hour. The reaction liquid was cooled, and then subjected to filtration, followed by removing unreacted HDI therefrom using a thin-film evaporator. A polyisocyanate P-1 having a NCO content of 23.1% by mass, a viscosity at 25°C of 1350 mPa.s, a number-average molecular weight of 590, an isocyanate group average number of 3.2, and a HDI monomer content of 0.1% by mass. Each molar ratio of the resultant polyisocyanate subjected to $^{13}$C-NMR measurement is shown in Table 1.

[Preparation Example 1-2]

100 parts of HDI and 0.12 parts of isobutanol were charged in a four-necked flask equipped with a stirrer, a thermometer, a reflux condenser, a nitrogen inlet tube, and a dropping funnel, under nitrogen atmosphere, and stirring was conducted while maintaining the temperature in the reactor at 80°C for 2 hours. Then, 0.08 parts of a solution obtained by diluting an isocyanurate-forming reaction catalyst, trimethyl-2-methyl-2-hydroxyethyl ammonium hydroxide, with isobutanol to 5% by mass was added to the resultant to allow an isocyanurate-forming reaction to proceed, and then a phosphoric acid was added to the reaction liquid to terminate the reaction when the conversion rate became 20%. Thereafter, the reaction liquid was left at 160°C for 1 hour. The reaction liquid was cooled, and then subjected to filtration, followed by removing unreacted HDI therefrom using a thin-film evaporator. A polyisocyanate P-2 having a NCO content of 23.2% by mass, a viscosity at 25°C of 470 mPa.s, a number-average molecular weight of 540, an isocyanate group average number of 3.0, and a HDI monomer content of 0.1% by mass. Each molar ratio of the resultant polyisocyanate subjected to $^{13}$C-NMR measurement is shown in Table 1.

[Preparation Example 1-3]

100 parts of HDI and 0.42 parts of isobutanol were charged in a four-necked flask equipped with a stirrer, a thermometer, a reflux condenser, a nitrogen inlet tube, and a dropping funnel, under nitrogen atmosphere, and stirring was conducted while maintaining the temperature in the reactor at 80°C for 2 hours. Then, 0.08 parts of a solution obtained by diluting an isocyanurate-forming reaction catalyst, trimethyl-2-methyl-2-hydroxyethyl ammonium hydroxide,

with isobutanol to 5% by mass was added to the resultant to allow an isocyanurate-forming reaction to proceed, and then a phosphoric acid was added to the reaction liquid to terminate the reaction when the conversion rate became 18%. Thereafter, the reaction liquid was left at 160°C for 1 hour. The reaction liquid was cooled, and then subjected to filtration, followed by removing unreacted HDI therefrom using a thin-film evaporator. A polyisocyanate P-3 having a NCO content of 23.1% by mass, a viscosity at 25°C of 310 mPa.s, a number-average molecular weight of 520, an isocyanate group average number of 2.9, and a HDI monomer content of 0.2% by mass. Each molar ratio of the resultant polyisocyanate subjected to $^{13}$C-NMR measurement is shown in Table 1.

[Preparation Example 1-4]

100 parts of HDI was charged in a four-necked flask equipped with a stirrer, a thermometer, a reflux condenser, a nitrogen inlet tube, and a dropping funnel, under nitrogen atmosphere, and stirring was conducted while maintaining the temperature in the reactor at 60°C. Then, 2.5 parts of a solution obtained by diluting an isocyanurate-forming reaction catalyst, tetrabutylammonium acetate, with 2-ethyl-1-hexanol to 0.2% by mass was added to the resultant to allow an isocyanurate-forming reaction to proceed, and then a phosphoric acid was added to the reaction liquid to terminate the reaction when the NCO content of the reaction liquid became 41.8% by mass. Thereafter, the reaction liquid was left at 90°C for 1 hour. The reaction liquid was cooled, and then subjected to filtration, followed by removing unreacted HDI therefrom using a thin-film evaporator. A polyisocyanate P-4 having a NCO content of 20.8% by mass, a viscosity at 25°C of 470 mPa.s, a number-average molecular weight of 560, an isocyanate group average number of 2.8, and a HDI monomer content of 0.1% by mass. Each molar ratio of the resultant polyisocyanate subjected to $^{13}$C-NMR measurement is shown in Table 1.

[Preparation Example 1-5]

100 parts of HDI, 0.09 parts of isobutanol, and 3 parts of 2-ethyl-1-hexanol were charged in a four-necked flask equipped with a stirrer, a thermometer, a reflux condenser, a nitrogen inlet tube, and a dropping funnel, under nitrogen atmosphere, and stirring was conducted while maintaining the temperature in the reactor at 80°C for 1 hour. Then, 0.005 parts of an isocyanurate-forming reaction catalyst, tetramethylammonium caprate, was added to the resultant to allow an isocyanurate-forming reaction to proceed, and then a phosphoric acid was added to the reaction liquid to terminate the reaction when the refractive-index change of the reaction liquid became 0.0085. Thereafter, the reaction liquid was left at 90°C for 1 hour. The reaction liquid was cooled, and then subjected to filtration, followed by removing unreacted HDI therefrom using a thin-film evaporator. A polyisocyanate P-5 having a NCO content of 20.4% by mass, a viscosity at 25°C of 340 mPa.s, a number-average molecular weight of 540, an isocyanate group average number of 2.6, and an unreacted HDI content of 0.1% by mass. Each molar ratio of the resultant polyisocyanate subjected to $^{13}$C-NMR measurement is shown in Table 1.

[Preparation Example 1-6]

100 parts of HDI was charged in a four-necked flask equipped with a stirrer, a thermometer, a reflux condenser, a nitrogen inlet tube, and a dropping funnel, under nitrogen atmosphere, and stirring was conducted while maintaining the temperature in the reactor at 60°C. Then, 0.05 parts of a solution obtained by diluting an iminooxadiazinedione-forming reaction catalyst, tetrabutylphosphonium hydrogen difluoride, with isopropanol to 70% by mass was added to the resultant and the inside temperature was maintained at 70°C or lower to allow iminooxadiazinedione-forming reaction to proceed, and then 0.0575 parts of a solution obtained by diluting p-toluenesulfonic acid with isopropanol to 40% by mass was added to the reaction liquid to terminate the reaction when the NCO content of the reaction liquid became 43.3% by mass. The reaction liquid was cooled, and then subjected to filtration, followed by removing unreacted HDI therefrom using a thin-film evaporator. A polyisocyanate P-6 having a NCO content of 23.4% by mass, a viscosity at 25°C of 640 mPa.s, a number-average molecular weight of 570, an isocyanate group average number of 3.2, and a HDI monomer content of 0.2% by mass. Each molar ratio of the resultant polyisocyanate subjected to $^{13}$C-NMR measurement is shown in Table 1.

[Preparation Example 1-7]

100 parts of HDI was charged in a four-necked flask equipped with a stirrer, a thermometer, a reflux condenser, a nitrogen inlet tube, and a dropping funnel, under nitrogen atmosphere, and stirring was conducted while maintaining the temperature in the reactor at 60°C. Then, 1.5 parts of a uretdione-forming reaction catalyst, tri-n-butylphosphine (Cytop (trademark) 340, Cytec), was added to the resultant to allow uretdione-forming reaction to proceed, and then 1.33 parts of methyl-p-toluenesulfonate was added to the reaction liquid to terminate the reaction when the conversion

rate determined by refractive-index measurement of the reaction liquid became 40%. The reaction liquid was cooled, and then subjected to filtration, followed by removing unreacted HDI therefrom using a thin-film evaporator. A polyisocyanate P-7 having a NCO content of 22.1% by mass, a viscosity at 25°C of 150 mPa.s, a number-average molecular weight of 440, an isocyanate group average number of 2.3, and a HDI monomer content of 0.3% by mass. Each molar ratio of the resultant polyisocyanate subjected to $^{13}$C-NMR measurement is shown in Table 1.

[Preparation Example 1-8]

100 parts of HDI was charged in a four-necked flask equipped with a stirrer, a thermometer, a reflux condenser, a nitrogen inlet tube, and a dropping funnel, under nitrogen atmosphere, and stirring was conducted while maintaining the temperature in the reactor at 160°C for 1.5 hours. The temperature in the reactor was lowered to 140°C, 1 part of an isocyanurate-forming reaction catalyst, hexamethyldisilazane, was added to the resultant to allow an isocyanurate-forming reaction to proceed for 30 minutes, followed by decreasing the temperature in the reactor to 90°C, adding 0.55 parts of n-butanol to the resultant, and then maintaining the resultant for 1 hour. The reaction liquid was cooled, and then subjected to filtration, followed by removing unreacted HDI therefrom using a thin-film evaporator. A polyisocyanate P-8 having a NCO content of 23.4% by mass, a viscosity at 25°C of 520 mPa.s, a number-average molecular weight of 540, an isocyanate group average number of 3.0, and a HDI monomer content of 0.1% by mass. Each molar ratio of the resultant polyisocyanate subjected to $^{13}$C-NMR measurement is shown in Table 1.

Table 1

| Polyisocyanate | | P. Ex. 1 - 1 | P. Ex. 1 - 2 | P. Ex. 1 - 3 | P. Ex. 1 - 4 | P. Ex. 1 - 5 | P. Ex. 1 - 6 | P. Ex. 1 - 7 | P. Ex. 1 - 8 |
|---|---|---|---|---|---|---|---|---|---|
| | | P-1 | P-2 | P-3 | P-4 | P-5 | P-6 | P-7 | P-8 |
| (Physical property 1) NCO content | % by mass | 23.1 | 23.2 | 23.1 | 20.8 | 20.4 | 23.4 | 22.1 | 23.4 |
| (Physical property 2) Viscosity | mPa.s/ 25°C | 1350 | 470 | 310 | 470 | 340 | 640 | 150 | 520 |
| (Physical property 3) Number average molecular weight | | 590 | 540 | 520 | 560 | 540 | 570 | 440 | 540 |
| (Physical property 4) Isocyanate group average number | | 3.2 | 3.0 | 2.9 | 2.8 | 2.6 | 3.2 | 2.3 | 3.0 |
| (Physical property 5) Content of diisocyanate monomers | % by mass | 0.1 | 0.1 | 0.2 | 0.1 | 0.1 | 0.2 | 0.3 | 0.1 |
| (Physical property 6) A: Isocyanurate group | % by mole | 95.5 | 73.4 | 62.9 | 68.0 | 48.1 | 48.5 | 16.0 | 75.5 |
| (Physical property 6) B: Iminooxadiazinedione group | % by mole | 1.6 | 0.1 | 0.1 | 1.3 | 1.2 | 44.6 | 6.7 | 0.3 |
| (Physical property 6)C: Uretdione group | % by mole | 0.3 | 22.1 | 23.0 | 0.2 | 0.2 | 4.5 | 74.3 | 18.1 |
| (Physical property 6) D: Allophanate group | % by mole | 2.5 | 4.1 | 13.9 | 30.5 | 50.5 | 0.5 | 1.3 | 0.7 |
| (Physical property 6) E: Biuret group | % by mole | 0.1 | 0.1 | 0.0 | 0.0 | 0.0 | 0.0 | 0.1 | 5.3 |
| (Physical property 6) F: Uretone imino group | % by mole | 0.0 | 0.2 | 0.1 | 0.0 | 0.0 | 1.9 | 1.6 | 0.1 |
| (P.Ex. = Preparation Example) | | | | | | | | | |

[Example 1-1] (for reference)

58 parts of the polyisocyanate P-1 and 14 parts of the polyisocyanate P-5 were charged in a four-necked flask equipped with a stirrer, a thermometer, a reflux condenser, and a nitrogen inlet tube, under nitrogen atmosphere, and

stirring was conducted until the mixture became uniform, to obtain a polyisocyanate composition. Results of each physical property of the obtained polyisocyanate composition are shown in Table 4. Then, an aspartic acid ester compound was added to the polyisocyanate composition to obtain a polyaspartic coating composition, followed by evaluating the polyaspartic coating composition in terms of the curability, the chemical resistance, and the weather resistance. The obtained results are shown in Table 6.

[Examples 1-2 to 1-6 (for reference) and Comparative examples 1-1 to 1-5]

Polyisocyanate compositions were obtained by the same way as that of Example 1-1 except that formulations shown in Table 2 or 3 were adopted. Each physical property of the obtained polyisocyanates are shown in Table 4 or 5. Then, an aspartic acid ester compound was added thereto to evaluate the curability, the chemical resistance, and the weather resistance. The obtained results are shown in Table 6.

Table 2

| | | Example 1-1 | Example 1-2 | Example 1-3 | Example 1-4 | Example 1-5 | Example 1-6 |
|---|---|---|---|---|---|---|---|
| Aspartic acid ester compound (A) (parts by mass) | Desmophen NH1420 | 50 | 50 | 50 | 50 | 50 | 50 |
| | Desmophen NH1520 | 50 | 50 | 50 | 50 | 50 | 50 |
| Polyisocyanate composition(B1) (parts by mass) | P-1 | 58 | 35 | 36 | - | - | - |
| | P-2 | - | - | - | 70 | - | - |
| | P-3 | - | - | - | - | 70 | - |
| | P-4 | - | - | - | - | - | 78 |
| | P-5 | 14 | - | - | - | - | - |
| | P-6 | - | 35 | - | - | - | - |
| | P-7 | - | - | 36 | - | - | - |
| | P-8 | - | - | - | - | - | - |

Table 3

| | | C. Ex. 1-1 | C. Ex. 1-2 | C. Ex. 1-3 | C. Ex. 1-4 | C. Ex. 1-5 |
|---|---|---|---|---|---|---|
| Aspartic acid ester compound (A) (parts by mass) | Desmophen NH1420 | 50 | 50 | 50 | 50 | 50 |
| | Desmophen NH1520 | 50 | 50 | 50 | 50 | 50 |
| Polyisocyanate composition(B1) (parts by mass) | P-1 | 70 | - | - | - | - |
| | P-2 | - | - | - | - | - |
| | P-3 | - | - | - | - | - |
| | P-4 | - | - | - | - | - |
| | P-5 | - | 80 | - | - | - |
| | P-6 | - | - | 69 | - | - |
| | P-7 | - | - | - | 73 | - |
| | P-8 | - | - | - | - | 69 |
| (C. Ex. = Comparative Example) | | | | | | |

Table 4

| | | Example 1-1 | Example 1-2 | Example 1-3 | Example 1-4 | Example 1-5 | Example 1-6 |
|---|---|---|---|---|---|---|---|
| (Physical property 1) NCO content | % by mass | 22.6 | 23.3 | 22.6 | 23.2 | 23.1 | 20.8 |
| (Physical property 2) Viscosity | mPa.s/25°C | 1040 | 930 | 450 | 470 | 310 | 470 |
| (Physical property 3) Number average molecular weight | | 580 | 580 | 515 | 540 | 520 | 560 |
| (Physical property 4) Isocyanate group average number | | 3.1 | 3.2 | 2.8 | 3.0 | 2.9 | 2.8 |
| (Physical property 5) Content of diisocyanate monomers | % by mass | 0.1 | 0.2 | 0.2 | 0.1 | 0.2 | 0.1 |
| (Physical property 6) A: Isocyanurate group | % by mole | 86.3 | 72.0 | 55.8 | 73.4 | 62.9 | 68.0 |
| (Physical property6)B: Iminooxadiazinedionegroup | % by mole | 1.5 | 23.1 | 4.2 | 0.1 | 0.1 | 1.3 |
| (Physical property 6) C: Uretdione group | % by mole | 0.3 | 2.4 | 37.3 | 22.1 | 23.0 | 0.2 |
| (Physical property 6) D: Allophanate group | % by mole | 11.8 | 1.5 | 1.9 | 4.1 | 13.9 | 30.5 |
| (Physical property 6) E: Biuret group | % by mole | 0.1 | 0.1 | 0.1 | 0.1 | 0.0 | 0.0 |
| (Physical property 6) F: Uretone imino group | % by mole | 0.0 | 1.0 | 0.8 | 0.2 | 0.1 | 0.0 |
| Molar ratio b=B/(A+B+C+D) | Molar ratio | 0.02 | 0.23 | 0.04 | 0.00 | 0.00 | 0.01 |
| Molar ratio c=C/(A+B+C+D) | Molar ratio | 0.00 | 0.02 | 0.38 | 0.22 | 0.23 | 0.00 |
| Molar ratio d=D/(A+B+C+D) | Molar ratio | 0.12 | 0.02 | 0.02 | 0.04 | 0.14 | 0.31 |
| Molar ratio x=(B+C+D)/(A+B+C+D) | Molar ratio | 0.14 | 0.27 | 0.44 | 0.26 | 0.37 | 0.32 |
| Molar ratio e=E/A | Molar ratio | 0.00 | 0.00 | 0.00 | 0.00 | 0.00 | 0.00 |
| Molar ratio f=F/(A+B+C+D) | Molar ratio | <0.001 | 0.010 | 0.008 | 0.002 | 0.001 | <0.001 |
| Formulation ratio | Molar ratio NCO/NH | 1.1 | 1.1 | 1.1 | 1.1 | 1.1 | 1.1 |
| Solvent | n-butyl acetate | 19 | 19 | 19 | 19 | 19 | 20 |

Table 5

| | | C. Ex. 1-1 | C. Ex. 1-2 | C. Ex. 1-3 | C. Ex. 1-4 | C. Ex. 1-5 |
|---|---|---|---|---|---|---|
| (Physical property 1) NCO content | % by mass | 23.1 | 20.4 | 23.4 | 22.1 | 23.4 |
| (Physical property 2) Viscosity | mPa.s/ 25°C | 1350 | 340 | 640 | 150 | 520 |
| (Physical property 3) Number average molecular weight | | 590 | 540 | 570 | 440 | 540 |
| (Physical property 4) Isocyanate group average number | | 3.2 | 2.6 | 3.2 | 2.3 | 3.0 |
| (Physical property 5) Content of diisocyanate monomers | % by mass | 0.1 | 0.1 | 0.2 | 0.3 | 0.1 |
| (Physical property 6) A: Isocyanurate group | % by mole | 95.5 | 48.1 | 48.5 | 16.0 | 75.5 |
| (Physical property6)B: Iminooxadiazinedione group | % by mole | 1.6 | 1.2 | 44.6 | 6.7 | 0.3 |
| (Physical property 6) C: Uretdione group | % by mole | 0.3 | 0.2 | 4.5 | 74.3 | 18.1 |
| (Physical property 6) D: Allophanate group | % by mole | 2.5 | 50.5 | 0.5 | 1.3 | 0.7 |
| (Physical property 6) E: Biuret group | % by mole | 0.1 | 0.0 | 0.0 | 0.1 | 5.3 |
| (Physical property 6) F: Uretone imino group | % by mole | 0.0 | 0.0 | 1.9 | 1.6 | 0.1 |
| Molar ratio b=B/(A+B+C+D) | Molar ratio | 0.02 | 0.01 | 0.45 | 0.07 | 0.00 |
| Molar ratio c=C/(A+B+C+D) | Molar ratio | 0.00 | 0.00 | 0.05 | 0.76 | 0.19 |
| Molar ratio d=D/(A+B+C+D) | Molar ratio | 0.03 | 0.51 | 0.01 | 0.01 | 0.01 |
| Molar ratio x=(B+C+D)/(A+B+C+D) | Molar ratio | 0.04 | 0.52 | 0.51 | 0.84 | 0.20 |
| Molar ratio e=E/A | Molar ratio | 0.00 | 0.00 | 0.00 | 0.01 | 0.07 |
| Molar ratio f=F/(A+B+C+D) | Molar ratio | <0.001 | <0.001 | 0.019 | 0.016 | 0.001 |
| Formulation ratio | Molar ratio NCO/NH | 1.1 | 1.1 | 1.1 | 1.1 | 1.1 |
| Solvent | n -butyl acetate | 19 | 21 | 19 | 19 | 19 |
| (C. Ex. = Comparative Example) | | | | | | |

Table 6

| | Example 1-1 | Example 1-2 | Example 1-3 | Example 1-4 | Example 1-5 | Example 1-6 |
|---|---|---|---|---|---|---|
| (Evaluation 1) high solid property | △ | ○ | ◎ | ◎ | ◎ | ◎ |
| (Evaluation 2) curability | ○ | ◎ | △ | ○ | ○ | △ |
| (Evaluation 3) chemical resistance | ○ | ○ | △ | ○ | ○ | △ |
| (Evaluation 4) weather resistance | ○ | △ | △ | ○ | △ | △ |
| (Evaluation 5) pot life | ○ | △ | ○ | ◎ | ◎ | ◎ |

| | Comparative Example 1-1 | Comparative Example 1-2 | Comparative Example 1-3 | Comparative Example 1-4 | Comparative Example 1-5 |
|---|---|---|---|---|---|
| (Evaluation 1) high solid property | × | ◎ | ○ | ◎ | ○ |
| (Evaluation 2) curability | ◎ | × | ◎ | × | ○ |
| (Evaluation 3) chemical resistance | ○ | △ | ○ | × | × |
| (Evaluation 4) weather resistance | ○ | × | × | × | △ |
| (Evaluation 5) pot life | ○ | ◎ | × | ○ | ◎ |

It was confirmed from the above-shown results that the aliphatic polyisocyanate compositions of the examples had a low viscosity suitable for high solid formulation or solventless formulation. In addition, the use of the polyaspartic coating compositions containing the aliphatic polyisocyanate compositions in the examples made it possible to obtain coating films having excellent chemical resistance and weather resistance, and realized an excellent pot life while maintaining the curability.

[Synthesis example 2-1] Synthesis of NTI

1060 g of 4-aminomethyl-1,8-octamethylenediamine (hereinafter, may be abbreviated as "triamine") was dissolved in 1500 g of methanol in a four-necked flask equipped with a stirrer, a thermometer and a gas inlet tube, followed by adding dropwise 1800 ml of 35% concentrated hydrochloric acid thereto gradually while conducting cooling. Then, methanol and water were removed from the resultant under reduced pressure to concentrate the resultant, followed by conducting drying a 60°C / 5 mmHg for 24 hours, to obtain a white solid triamine hydrochloride. 650 g of the obtained triamine hydrochloride was pulverized to fine powder, and suspended in 5000 g of o-dichlorobenzene, followed by increasing the temperature of the reaction liquid while conducting stirring. When the temperature of the reaction liquid reached 100°C, phosgene injection was started at a rate of 200 g / Hr while increasing the temperature. When the temperature of the reaction liquid reached 180°C, the temperature was maintained for 12 hours while conducting phosgene injection. Then, the dissolved phosgene and the solvent were distilled off under reduced pressure, followed by conducting vacuum distillation to obtain 420 g of colorless and transparent 4-isocyanatemethyl-1,8-octamethylene diisocyanate (hereinafter, may be abbreviated as "NTI") having a boiling point of 161°C / 1.2 mmHg to 163°C / 1.2 mmHg. The NCO content of the NTI was 50.0% by mass.

[Synthesis example 2-2] Synthesis of LTI

122.2 g of ethanolamine, 100 mL of o-dichlorobenzene, and 420 mL of toluene were charged in a four-necked flask equipped with a stirrer, a thermometer and a gas inlet tube, followed by injecting hydrogen chloride gas thereinto while conducting ice-cooling to make the ethanolamine be a hydrochloride. Then, 182.5 g of lysine hydrochloride was added to the resultant, and the reaction liquid was heated to 80°C to dissolve the ethanolamine hydrochloride, followed by injecting hydrogen chloride gas thereinto to obtain lysine dihydrochloride. Then, hydrogen chloride gas was passed through the resultant at a rate of 20 mL / minute to 30 mL / minute, the reaction liquid was heated to 116°C, and then the temperature was maintained until water was completely distilled off. Then, the resultant reaction mixture was recrystallized in a mixed liquid composed of methanol and ethanol to obtain 165 g of lysine β-aminoethyl ester trihydrochloride. 100 g of the lysine β-aminoethyl ester trihydrochloride was pulverized to fine powder, and suspended in 1200 mL of o-dichlorobenzene, followed by increasing the temperature of the reaction liquid while conducting stirring. When the temperature of the reaction liquid reached 120°C, phosgene injection was started at a rate of 0.4 mol / Hr, and continued for 10 hours. The reaction liquid was heated to 150°C to dissolve almost all lysine β-aminoethyl ester trihydrochloride in the reaction liquid. Then, the resultant was cooled and filtrated, and the dissolved phosgene and the solvent were distilled off under reduced pressure. Then, vacuum distillation was conducted to obtain 80.4 g of colorless and transparent LTI having a boiling point of 155°C / 0.022 mmHg to 157°C / 0.022 mmHg. The NCO content of the LTI was 47.1% by mass.

[Synthesis example 2-3] Synthesis of GTI

275 g of glutamic acid hydrochloride, 800 g of ethanolamine hydrochloride, and 150 mL of toluene were charged in a four-necked flask equipped with a stirrer, a thermometer and a gas inlet tube, followed by conducting heating to reflux at 110°C for 24 hours while injecting hydrogen chloride gas thereinto until azeotropy of water was not confirmed. Then, the resultant reaction mixture was recrystallized in a mixed liquid composed of methanol and ethanol to obtain 270 g of bis(2-aminoethyl)glutamate trihydrochloride. 85 g of bis(2-aminoethyl)glutamate trihydrochloride was suspended in 680 g of o-dichlorobenzene, and the temperature of the reaction liquid was increased while conducting stirring. When the temperature of the reaction liquid reached 135°C, phosgene injection was started at a rate of 0.8 mol / Hr and continued for 13 hours while retaining the temperature. Then, the reaction resultant was filtrated and then concentrated under reduced pressure, followed by purifying the resultant using a thin-film evaporator to obtain 54 g of GTI. The NCO content of the GTI was 39.8% by mass.

[Example 2-1] Preparation of polyaspartic coating composition

The NTI obtained in the Synthesis example 2-1 was evaluated in terms of each physical property and high solid property.

Then, "Desmophen 1420" (aspartic acid ester compound, trade name manufactured by Covestro, an amine value thereof was 201 mgKOH / resin g) and "Desmophen 1520" (aspartic acid ester compound, trade name manufactured by Covestro, an amine value thereof was 191 mgKOH / resin g) were blended at a mass ratio of 1/1 in advance. The blended aspartic acid ester compounds and the NTI were mixed such that NCO / NH became 1.1, followed by adding n-butyl acetate to the mixture such that the solid content in a coating composition became 90% by mass, to obtain a polyaspartic coating composition. The curability and the hardness of the resultant polyaspartic coating composition were evaluated. The obtained results are shown in Table 7 below.

[Example 2-2] Preparation of polyaspartic coating composition

29 parts of NTI and 7 parts of DURANATE TKA-100 (trade name) (manufactured by Asahi Kasei Corporation, isocyanurate type, Mn = 650) were charged in a four-necked flask equipped with a stirrer, a thermometer, a reflux condenser, and a nitrogen inlet tube, under nitrogen atmosphere. Then, stirring was conducted until the mixture became uniform to obtain a polyisocyanate composition. Each physical property and high solid property of the obtained polyisocyanate composition is shown in Table 7.

Then, a polyaspartic coating composition was prepared by the same way as that of Example 2-1 using the obtained polyisocyanate composition. The curability and the hardness of the obtained polyaspartic coating composition were evaluated. The obtained results are shown in Table 7 below.

[Examples 2-3 to 2-5, 2-7 and 2-9 (Examples 2-5, 2-7 and 2-9 for reference), and Comparative examples 2-1 to 2-3]

Polyisocyanate compositions were obtained by the same way as that of Example 2-2 except that the kind of triisocyanate compound and the content of triisocyanate compound or DURANATE TKA-100 are shown in Table 7 or 8. Results of each physical property and the high solid property of the obtained polyisocyanate compositions are shown in Table 7 (Examples 2-3 to 2-5, 2-7 and 2-9) and Table 8 (Comparative examples 2-1 to 2-3).

Then, each polyaspartic coating composition was obtained by the same way as that of Example 2-1 using the obtained polyisocyanate compositions. The curability and the hardness of the obtained polyaspartic coating compositions were evaluated. The obtained results are shown in Tables 7 and 8 below.

[Example 2-6]

Each physical property and high solid property of the LTI obtained in the Synthesis example 2-2 was evaluated.

Then, a polyaspartic coating composition was prepared by the same way as that of Example 2-1 using the LTI. The curability and the hardness of the obtained polyaspartic coating composition were evaluated. The obtained results

are shown in Table 7 below.

[Example 2-8]

Each physical property and high solid property of the GTI obtained in the Synthesis example 2-3 was evaluated.
Then, a polyaspartic coating composition was prepared by the same way as that of Example 2-1 using the GTI. The curability and the hardness of the obtained polyaspartic coating composition were evaluated. The obtained results are shown in Table 7 below.

[Comparative examples 2-4]

Each physical property and high solid property of DURANATE TKA-100 was evaluated.
Then, a polyaspartic coating composition was prepared by the same way as that of Example 2-1 using the DURANATE TKA-100. The curability and the hardness of the obtained polyaspartic coating composition were evaluated. The obtained results are shown in Table 8 below.

Table 7 (Note: Examples 2-5, 2-7 and 2-9 for reference)

| | | Example 2-1 | Example 2-2 | Example 2-3 | Example 2-4 | Example 2-5 | Example 2-6 | Example 2-7 | Example 2-8 | Example 2-9 |
|---|---|---|---|---|---|---|---|---|---|---|
| Aspartic acid ester compound (A) [parts by mass] | Desmophen NH1420 | 50 | 50 | 50 | 50 | 50 | 50 | 50 | 50 | 50 |
| | Desmophen NH1520 | 50 | 50 | 50 | 50 | 50 | 50 | 50 | 50 | 50 |
| Triisocyanate compound (b1) [parts by mass] | NTI | 32 | 29 | 25 | 20 | 12 | - | - | - | - |
| | LTI | - | - | - | - | - | 34 | 12 | - | - |
| | GTI | - | - | - | - | - | - | - | 41 | 15 |
| HDI-based polyisocyanate (b2) [parts by mass] | TKA-10Q※ | - | 7 | 17 | 29 | 47 | - | 48 | - | 46 |
| (Physical property 1) NCO content | % by mass | 50.0 | 44.3 | 38.7 | 33.0 | 27.4 | 47.1 | 26.8 | 39.8 | 26.2 |
| (Physical property 2) Viscosity | mPa.s/25°C | 10 | 30 | 90 | 290 | 880 | 25 | 1060 | 50 | 1000 |
| (Physical property 3) Number average molecular weight | | 250 | 290 | 350 | 410 | 500 | 270 | 510 | 320 | 530 |
| (Physical property 4) Isocyanate group average number | | 3.0 | 3.1 | 3.2 | 3.2 | 3.3 | 3.0 | 3.3 | 3.0 | 3.3 |
| Formulation ratio | Molar ratio NCO/NH | 1.1 | 1.1 | 1.1 | 1.1 | 1.1 | 1.1 | 1.1 | 1.1 | 1.1 |
| Solvent [parts by mass] | n-butyl acetate | 15 | 15 | 16 | 17 | 18 | 15 | 18 | 16 | 18 |
| (Evaluation 1) High solid property | | ◎ | ◎ | ◎ | ◎ | ○ | ◎ | △ | ◎ | △ |
| (Evaluation 2) Curability | | ○ | ○ | ○ | ○ | ○ | ○ | ○ | ○ | ○ |
| (Evaluation 6) Hardness | | ◎ | ○ | ○ | ○ | △ | ◎ | △ | ◎ | △ |

※ TKA-100: HDI-based polyisocyanate "DURANATE TKA-100" (trade name: manufactured by Asahi Kasei Corporation, isocyanurate type, Mn = 650)

Table 8

| | | C. Ex. 2-1 | C. Ex. 2-2 | C. Ex. 2-3 | C. Ex. 2-4 |
|---|---|---|---|---|---|
| Aspartic acid ester compound (A) [parts by mass] | Desmophen NH 1420 | 50 | 50 | 50 | 50 |
| | Desmophen NH1520 | 50 | 50 | 50 | 50 |
| Triisocyanate compound (b1) [parts by mass] | NTI | 7 | - | - | - |
| | LTI | - | 7 | - | - |
| | GTI | - | - | 10 | - |
| HDI-based polyisocyanate (b2) [parts by mass] | TKA-100 ※ | 59 | 60 | 56 | 74 |
| (Physical property 1) NCO content | % by mass | 24.5 | 24.2 | 24.4 | 21.7 |
| (Physical property 2) Viscosity | mPa.s/25°C | 1440 | 1690 | 1480 | 2700 |
| (Physical property 3) Number average molecular weight | | 580 | 590 | 560 | 650 |
| (Physical property 4) Isocyanate group average number | | 3.4 | 3.4 | 3.3 | 3.4 |
| Formulation ratio | Molar ratio NCO/NH | 1.1 | 1.1 | 1.1 | 1.1 |
| Solvent [parts by mass] | n-butyl acetate | 18 | 19 | 18 | 19 |
| (Evaluation 1) High solid property | | × | × | × | × |
| (Evaluation 2) Curability | | ○ | ○ | ○ | ○ |
| (Evaluation 6) Hardness | | × | × | × | × |
| ※' TKA-100: HDI-based polyisocyanate "DURANATE TKA-100" (trade name: manufactured by Asahi Kasei Corporation, isocyanurate type, Mn = 650) (C. Ex. = Comparative Example) | | | | | |

It was confirmed from Table 7 that the viscosity of the polyisocyanate composition was less thatn 1200 mPa·s, which was low, in the case where the content of the triisocyanate compound, relative to the total mass of the content of the triisocyanate compound, relatvie to the total mass of the polyisoyanate composition, was 20% by mass or more. In addition, the polyaspartic coating composition containing the polysiocyanate composition having the low viscosity was excellent in curability. In addition, the hardness of the coating film obtained from the polyaspartic coating composition was 100 or more, which was high.

In contrast, it was confirmed from Table 8 that the viscosity of the polyisocyanate composition was 1200 mPa • s or more, which was high, in the case where the content of the triisocyanate compound, relative to the total mass of the polyisocyanate composition, was less than 20% by mass. In addition, the polyaspartic coating composition containing the polyisocyanate composition having the high viscosity was excellent in curability, but the hardness of the obtained coating film was less than 100, which was low.

As shown above, it was confirmed that the polyaspartic coating compositions according to the present invention realized excellent curability by containing the polyisocyanate compositions having a low viscosity. In addition, it was confirmed that the use of the polyaspartic coating composition made it possible to form a coating film having a high hardness.

INDUSTRIAL APPLICABILITY

The polyaspartic coating composition according to the present invention may be preferably used as a primer, intermediate, or upper coating material to be applied on metal such as a steel plate or surface-treated steel plate, plastic, ceramic of inorganic material or the like, glass, or concrete, by roll coating, curtain flow coating, spray coating, electrostatic coating, bell coating, immersion, roller coating, brush coating or the like. The polyaspartic coating composition is preferably

used to impart an aesthetically pleasing appearance, weather resistance, acid resistance, rust resistance, chipping resistance, adhesiveness, or the like. Moreover, the polyaspartic coating composition is also useful as an adhesive, tackifier, elastomer, foam, surface-treating agent, or the like.

## Claims

1. A polyaspartic coating composition, comprising:

(A) an aspartic acid ester compound of formula (I); and
(B2) a polyisocyanate composition comprising a triisocyanate compound (b1) of formula (VIII),
wherein a content of the triisocyanate compound (b1), relative to a total mass of the polyisocyanate composition (B2), is 40% by mass to 100% by mass,

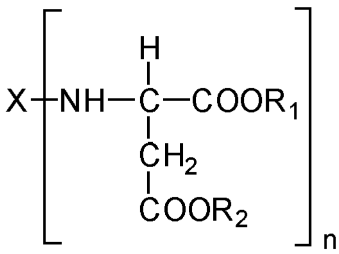

(I)

in the formula (I), X is an n-valent organic group obtained by removing a primary amino group from an n-valent polyamine, $R_1$ and $R_2$ are identical or different organic groups inactive against an isocyanate group under reaction conditions, and n is an integer of 2 or more,

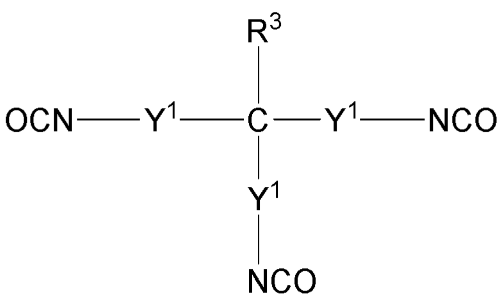

(VIII)

in the formula (VIII), plural $Y^1$ each independently represents a single bond, or a C1-20 divalent hydrocarbon group which may have at least one selected from the group consisting of an ester structure and an ether structure, the plural $Y^1$ are identical to or different from each other, and $R^3$ is a hydrogen atom or a C1-12 monovalent hydrocarbon group.

2. The polyaspartic coating composition according to claim 1, wherein the polyisocyanate composition (B2) further comprises a polyisocyanate (b2) obtained from at least one diisocyanate selected from the group consisting of aliphatic diisocyanates and alicyclic diisocyanates, and
a content of the polyisocyanate (b2), relative to a total mass of the polyisocyanate composition (B2), is more than 0% by mass and no more than 60% by mass.

3. The polyaspartic coating composition according to claim 1 or 2, wherein a viscosity at 25°C of the polyisocyanate composition is 10 mPa.s to 1000 mPa.s.

4. The polyaspartic coating composition according to any one of claims 1 to 3, wherein an equivalent ratio of an amino group of the aspartic acid ester compound and isocyanate group of the polyisocyanate composition, amino group: isocyanate group, is 10:1 to 1:10.

5. The polyaspartic coating composition according to any one of claims 1 to 4, wherein the diisocyanate monomers

comprise a hexamethylene diisocyanate.

6. A coating film formed by a polyaspartic coating composition of any one of claims 1 to 5.

7. A coating article comprising a coating film of claim 6.

**Patentansprüche**

1. Polyaspartat-Beschichtungszusammensetzung, umfassend:

(A) eine Asparaginsäureesterverbindung der Formel (I); und
(B2) eine Polyisocyanatzusammensetzung, welche eine Triisocyanatverbindung (b1) der Formel (VIII) umfasst, wobei ein Gehalt der Triisocyanatverbindung (b1) in Bezug auf die Gesamtmasse der Polyisocyanatzusammensetzung (B2) 40 Massen-% bis 100 Massen-% beträgt,

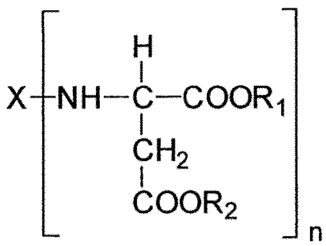

(I)

wobei in Formel (I) X eine n-bindige organische Gruppe ist, die durch Entfernen einer primären Aminogruppe von einem n-bindigen Polyamin erhalten wird, und $R_1$ und $R_2$ gleiche oder verschiedene organische Gruppen sind, welche unter Reaktionsbedingungen gegenüber einer Isocyanatgruppe inaktiv sind, und n eine ganze Zahl von 2 oder mehr ist,

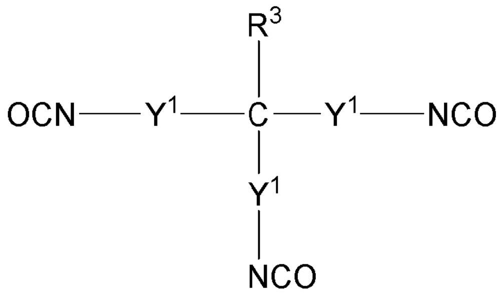

(VIII)

wobei in der Formel (VIII) mehrere $Y^1$ jeweils unabhängig voneinander eine Einfachbindung oder eine zweibindige C1-20-Kohlenwasserstoffgruppe, die mindestens eine aus der Gruppe bestehend aus einer Esterstruktur und einer Etherstruktur aufweisen kann, darstellen können, wobei die mehreren $Y^1$ gleich oder verschieden voneinander sind, und $R^3$ ein Wasserstoffatom oder eine einbindige C1-12-Kohlenwasserstoffgruppe ist.

2. Polyaspartat-Beschichtungszusammensetzung nach Anspruch 1, wobei die Polyisocyanatzusammensetzung (B2) weiterhin ein Polyisocyanat (b2) umfasst, welches aus mindestens einem Diisocyanat aus der Gruppe, bestehend aus aliphatischen Diisocyanaten und alicyclischen Diisocyanaten, erhalten wird.

3. Polyaspartat-Beschichtungszusammensetzung nach Anspruch 1 oder 2, wobei eine Viskosität bei 25°C der Polyisocyanatzusammensetzung 10 mPa·s bis 1000 mPa·s beträgt.

4. Polyaspartat-Beschichtungszusammensetzung nach einem der Ansprüche 1 bis 3, wobei ein Äquivalentverhältnis zwischen einer Aminogruppe der (A) Asparaginsäureesterverbindung und Isocyanatgruppe der Polyisocyanatzusammensetzung, also Aminogruppe : Isocyanatgruppe, 10:1 bis 1:10 ist.

5. Polyaspartat-Beschichtungszusammensetzung nach einem der Ansprüche 1 bis 4, wobei die Diisocyanatmonomere ein Hexamethylendiisocyanat enthalten.

6. Beschichtungsfilm, welcher durch eine Polyaspartat-Beschichtungszusammensetzung nach einem der Ansprüche 1 bis 5 gebildet ist.

7. Beschichteter Gegenstand/Beschichtungsgegenstand, welcher einen Beschichtungsfilm nach Anspruch 6 umfasst.

## Revendications

1. Composition de revêtement polyaspartique, comprenant :

(A) un composé ester d'acide aspartique de formule (I) ; et
(B2) une composition de polyisocyanate comprenant un composé triisocyanate (b1) de formule (VIII),
dans laquelle une teneur du composé triisocyanate (b1), par rapport à une masse totale de la composition de polyisocyanate (B2), est de 40 % en masse à 100 % en masse,

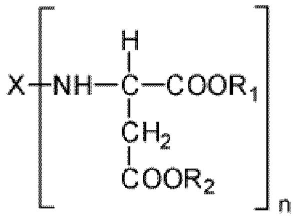
(I)

dans la formule (I), X est un groupe organique de valence n obtenu par élimination d'un groupe amino primaire d'une polyamine de valence n, $R^1$ et $R^2$ sont des groupes organiques identiques ou différents inactifs contre un groupe isocyanate dans les conditions de réaction, et n est un nombre entier de 2 ou plus,

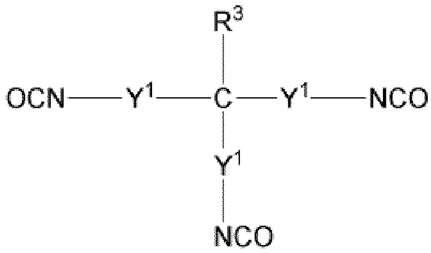
(VIII)

dans la formule (VIII), plusieurs $Y^1$ représentent chacun indépendamment une liaison simple, ou un groupe hydrocarboné divalent en C1-20 qui peut avoir au moins une structure choisie dans le groupe constitué d'une structure ester et d'une structure éther, les plusieurs $Y^1$ sont identiques les uns aux autres ou différents les uns des autres, et $R^3$ est un atome d'hydrogène ou un groupe hydrocarboné monovalent en C1-12.

2. Composition de revêtement polyaspartique selon la revendication 1, dans laquelle la composition de polyisocyanate (B2) comprend en outre un polyisocyanate (b2) obtenu à partir d'au moins un diisocyanate choisi dans le groupe constitué de diisocyanates aliphatiques et de diisocyanates alicycliques, et une teneur du polyisocyanate (b2), par rapport à une masse totale de la composition de polyisocyanate (B2), est supérieure à 0 % en masse et non supérieure à 60 % en masse.

3. Composition de revêtement polyaspartique selon la revendication 1 ou 2, dans laquelle une viscosité à 25 °C de la composition de polyisocyanate est de 10 mPa.s à 1 000 mPa.s.

4. Composition de revêtement polyaspartique selon l'une quelconque des revendications 1 à 3, dans laquelle un rapport équivalent d'un groupe amino du composé ester d'acide aspartique et d'un groupe isocyanate de la composition de polyisocyanate, groupe amino:groupe isocyanate, est de 10:1 à 1:10.

5. Composition de revêtement polyaspartique selon l'une quelconque des revendications 1 à 4, dans laquelle les monomères de diisocyanate comprennent un diisocyanate d'hexaméthylène.

6. Film de revêtement formé par une composition de revêtement polyaspartique selon l'une quelconque des revendications 1 à 5.

7. Article de revêtement comprenant un film de revêtement selon la revendication 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6183870 B1
- EP 0959086 A1
- EP 1347004 A1
- US 20150158966 A1
- WO 2016146574 A1
- JP 3043472 A
- JP 53106797 A
- JP 55011452 A
- JP 59095259 A
- JP 57034107 A
- JP 61275311 A
- JP 63015264 A
- JP 57198760 A
- JP 4001033 B
- JP 53135931 A
- JP 63015264 B